# EUROPÄISCHE PATENTSCHRIFT

(11) **EP 2 303 543 B1**
(45) Veröffentlichungstag und Bekanntmachung des Hinweises auf die Patenterteilung: **23.04.2014**
(21) Anmeldenummer: 09765581.5
(22) Anmeldetag: 12.06.2009
(51) Int. Cl.: B29C 47/40, B29C 47/60

(54) **VERFAHREN ZUR KONSTRUKTION GLEICHSINNIG ROTIERENDER, SICH BERÜHRENDER KÖRPER, VERWENDUNG UND COMPUTERPROGRAMMPRODUKT UM DAS VERFAHREN DURCHZUFÜHREN**
METHOD FOR CONSTRUCTING CO-ROTATING, CONTIGUOUS BODIES, USE AND COMPUTER PROGRAM PRODUCT FOR CARRYING OUT SAID METHOD
PROCÉDÉ DE CONSTRUCTION DE CORPS CO-ROTATIFS EN CONTACT LES UNS AVEC LES AUTRES, UTILISATION ET LOGICIELLE POUR LA MISE EN OEUVRE DUDIT PROCÉDÉ

(30) Priorität: 20.06.2008 DE 102008029304
(43) Veröffentlichungstag der Anmeldung: 06.04.2011
(73) Patentinhaber: Bayer Intellectual Property GmbH, 40789 Monheim (DE)
(72) Erfinder: BIERDEL, Michael, 51373 Leverkusen (DE); KÖNIG, Thomas, 51375 Leverkusen (DE); LIESENFELDER, Ulrich, 51469 Bergisch Gladbach (DE)
(74) Vertreter: BIP Patents
(86) Internationale Anmeldenummer: PCT/EP2009/004249
(87) Internationale Veröffentlichungsnummer: WO 2009/153001

(56) Entgegenhaltungen:
- EP-A2- 1 093 905
- WO-A1-2004/009326
- WO-A2-02/09919
- US-A- 3 195 868
- US-A- 3 900 187
- US-A- 4 063 717

## Beschreibung

Die Erfindung betrifft ein Verfahren zur Konstruktion von Körpern, die sich bei der gleichsinnigen Rotation um zwei parallel angeordnete Achsen in der Weise streifen, dass sie sich stets in mindestens einem Punkt berühren.

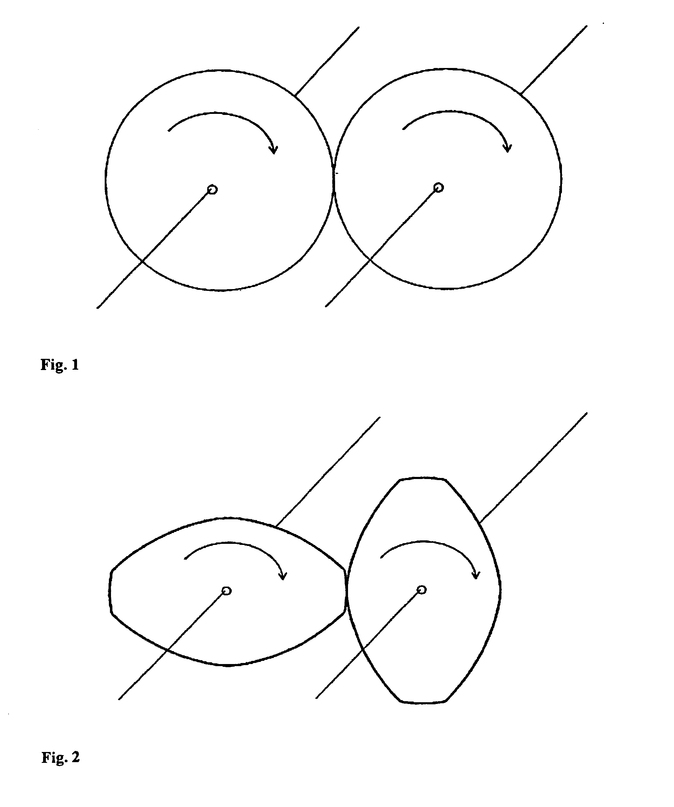

Es seien zwei Kreise betrachtet, die auf zwei parallelen Achsen wie in Figur 1 schematisch dargestellt nebeneinander angeordnet sind. Es ist allgemein bekannt, dass sich die Kreise bei einer gleichsinnigen Rotation in der Weise streifen, dass sie sich bei der Rotation stets in einem Punk berühren, der zwischen den Drehmittelpunkten der Kreise liegt.

Weiterhin ist bekannt, dass es neben Kreisen eine Reihe weiterer geometrischer Figuren gibt, die sich bei einer gleichsinnigen Rotation stets in einem Punkt tangieren. Ein Beispiel ist in Figur 2 gezeigt.

Die in den Figuren 1 und 2 gezeigten zweidimensionalen geometrischen Figuren lassen sich auf verschiedene Weise in die dritte Dimension fortsetzen. Eine einfache Möglichkeit ist z.B. die lineare Fortsetzung der Figuren in Richtung der Drehachsen, so dass scheibenförmige Körper entstehen, die sich bei einer gleichsinnigen Rotation entlang einer Linie zwischen den Drehmittelpunkten, die parallel zu den Drehachsen verläuft, streifen.

Eine weitere Möglichkeit besteht z.B. darin, die geometrischen Figuren entlang der Drehachsen schraubenförmig fortzusetzen, so dass schraubenförmige Körper entstehen, die sich entlang einer Kurve zwischen den Körpern berühren.

Bedeutung haben solche Körper, die sich bei gleichsinniger Rotation um parallel angeordnete Achsen stets in mindestens einem Punkt berühren, insbesondere in der Extrudertechnik, wo sie als Schneckenextruder z.B. zur Verarbeitung viskoser Massen oder zu Mischzwecken eingesetzt werden. Solche gleichläufigen Zwei- und Mehrwellenextruder sind dem Fachmann aus der Patent- und Fachliteratur bekannt. Beispielhaft sei hier die folgende Veröffentlichung [1] erwähnt: K. Kohlgrüber: "Der gleichläufige Doppelschneckenextruder", Hanser Verlag, 2007. Bei Schneckenextrudern hat die Eigenschaft, dass sich benachbarte Schnecken bei gleichsinniger Rotation paarweise streifen, den Vorteil, dass sie sich gegenseitig abschaben und daher gegenseitig abreinigen.

Es gibt für ausgewählte Körper, die sich bei gleichsinniger Rotation um parallel angeordnete Achsen stets in mindestens einem Punkt tangieren, Vorschriften zu ihrer Konstruktion.

So ist z.B. aus der Literatur für Schneckenextruder bekannt (siehe z.B. [1] Seiten 96 bis 98), dass sich ein Schneckenelement mit einem Querschnittsprofil wie die geometrische Figur in Fig. 2 der vorliegenden Anmeldung aus Kreisbögen zusammensetzen lässt.

Es ist jedoch nicht bekannt, welche Kriterien allgemein erfüllt sein müssen, damit sich zwei gleichsinnig um zwei parallel angeordnete Achsen rotierende Körper stets in mindestens einem Punkt tangieren.

Es ist bekannt (siehe z.B. [2]: Booy "Geometry of fully wiped twin-screw equipment", Polymer Engineering and Science 18 (1978) 12, Seiten 973 - 984), dass die gleichsinnige Rotation zweier tangierender Körper um ihre ortsfesten Achsen kinematisch gleichwertig mit der "Schiebung ohne Rotation" eines Körpers um den anderen, dann feststehenden Körper ist. Diese Besonderheit kann dazu verwendet werden, schrittweise geometrische Figuren zu erzeugen, die sich bei gleichsinniger Rotation stets in einem Punkt tangieren. Die erste Figur (die "erzeugte") steht bei der Betrachtung still und die zweite Figur (die "erzeugende") wird um die erste translatorisch auf einem Kreisbogen verschoben. Man kann nun einen Teil des Profils der zweiten Figur vorgeben und untersuchen, welches Profil auf der ersten Figur dadurch erzeugt wird. Die erzeugte Figur wird durch die erzeugende gewissermaßen "herausgeschnitten".

Wertere Verfahren werden in US3900187, US4063717, EP1093905, US3195868, WO02004009326 und WO 0209919 offenbart.

Es ist jedoch kein allgemeines Verfahren bekannt, wie der Teil der zweiten Figur, der vorgegeben wird, selbst zu erzeugen ist. In [2] ist ein möglicher Ansatz beschrieben, wie der Profilabschnitt, von dem man ausgehen kann und aus dem das restliche Profil erzeugt wird, generiert werden kann. Dieser Ansatz ist jedoch mathematisch sehr aufwändig und vor allem nicht allgemeingültig, das heißt es lassen sich nur solche Profile erzeugen, die sich durch die in [2] angegebenen mathematischen Funktionen beschreiben lassen.

Es stellt sich daher ausgehend vom Stand der Technik die Aufgabe, ein allgemeines Verfahren bereitzustellen, mit dem Körper konstruiert werden können, die sich bei gleichsinniger Rotation stets in mindestens einem Punkt berühren. Die Lösung ist ein Verfahren, ein Computerprogrammprodukt und eine Verwendung nach Ansprüchen 1, 11 und 12.

Überraschend wurden die Grundprinzipien gefunden, die solchen Körpern zugrunde liegen, die sich bei gleichsinniger Rotation um parallel angeordnete Achsen stets in mindestens einem Punkt berühren. Auf Basis dieser Grundprinzipien lässt sich ein einfaches Verfahren formulieren, mit dem solche Körper konstruiert werden können. Überraschend wurde gefunden, dass sich solche Körper auf einfache Weise mit Zirkel und Winkellineal auf Papier konstruieren lassen, ohne dass komplizierte Berechnungen nötig sind.

Gegenstand der vorliegenden Erfindung ist daher ein Verfahren zur Konstruktion von Körpern, die sich bei gleichsinniger Rotation stets in mindestens einem Punkt berühren, das durch die Merkmale des Anspruchs 1 gekennzeichnet ist.

Die Grundprinzipien, die dem erfindungsgemäßen Verfahren zu Grunde liegen, beziehen sich auf die Profile zweier Körper K1 und K2. Unter einem Profil eines Körpers wird entweder das Profil eines Querschnitts senkrecht zur Drehachse des Körpers oder das Profil einer Projektion des Körpers auf eine Ebene senkrecht zur Drehachse des Körpers verstanden.

Die Grundprinzipien lauten:
1. Es wurde überraschend gefunden, dass sich die Profile von zwei Körpern K1 und K2, die auf parallelen Achsen in einem Achsabstand a zueinander angeordnet sind und die sich bei gleichsinniger Rotation um diese Achsen stets in mindestens einem Punkt berühren, immer aus Kreisbögen zusammensetzen lassen.
   Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens lässt durch die Position seines Mittelpunkts und durch die Position seines Anfangs- oder Endpunkts festlegen, wobei es nicht festgelegt ist, welches der Anfangs- und welches der Endpunkt ist, da ein Kreisbogen ausgehend vom Anfangspunkt und endend im Endpunkt im Uhrzeigersinn oder gegen den Uhrzeigersinn konstruiert werden kann. Anfangs- und Endpunkt sind also vertauschbar.
2. Es wurde überraschend gefunden, dass die Kreisbögen der Profile der Körper K1 und K2, an ihren Anfangs- und Endpunkten tangential ineinander übergehen.
3. Es wurde überraschend gefunden, dass das Grundprinzip 2 auch für Profile mit einem "Knick" gilt, wenn der Knick durch einen Kreisbogen beschrieben wird, dessen Radius gleich 0 ist.
   Die "Größe des Knicks" ist durch den entsprechenden Winkel des Kreisbogens mit dem Radius 0 gegeben, d.h. bei einem Knick erfolgt ein Übergang eines ersten Kreisbogens durch Drehung um den Winkel eines zweiten Kreisbogens mit Radius Null in einen dritten Kreisbogen. Oder anders ausgedrückt: eine Tangente an den ersten Kreisbogen im Mittelpunkt des zweiten Kreisbogens mit dem Radius Null schneidet eine Tangente an den dritten Kreisbogen ebenfalls im Mittelpunkt des zweiten Kreisbogens in einem Winkel, der dem Winkel des zweiten Kreisbogens entspricht. Unter Berücksichtigung des zweiten Kreisbogens gehen alle benachbarten Kreisbögen erster → zweiter → dritter tangential ineinander über. Zweckmäßigerweise wird ein Kreisbogen mit einem Radius Null wie ein Kreisbogen behandelt, dessen Radius gleich eps ist, wobei eps eine sehr kleine positive reelle Zahl ist, die gegen 0 strebt (eps<<1, eps →0).
4. Es wurde überraschend gefunden, dass jeweils ein Kreisbogen des Körpers K1 mit einem Kreisbogen des Körpers K2 "korrespondiert", wobei unter "korrespondieren" verstanden wird, dass
   - die Winkel von korrespondierenden Kreisbögen gleich groß sind,
   - die Summe der Radien korrespondierender Kreisbögen gleich dem Achsabstand a ist,
   - je eine der Verbindungslinien zwischen dem Mittelpunkt eines Kreisbogens des Körpers K1 und dessen Endpunkten parallel zu je einer der Verbindungslinien zwischen dem Mittelpunkt des korrespondierenden Kreisbogens des Körpers K2 und dessen Endpunkten verläuft,
   - die Richtungen, in denen die Endpunkte eines Kreisbogens des Körpers K1 vom Mittelpunkt des Kreisbogens aus liegen, jeweils entgegengesetzt sind zu den Richtungen, in denen die Endpunkte des korrespondierenden Kreisbogens des Körpers K2 vom Mittelpunkt des Kreisbogens des Körpers K2 aus liegen,
   - der Mittelpunkt eines Kreisbogens des Körpers K1 einen Abstand zum Mittelpunkt eines korrespondierenden Kreisbogens des Körpers K2 hat, der dem Achsabstand entspricht,
   - die Verbindungslinie zwischen dem Mittelpunkt eines Kreisbogens des Körpers K1 und dem Mittelpunkt des korrespondierenden Kreisbogens des Körpers K2 parallel zu der Verbindungslinie zwischen dem Drehpunkt des Körpers K1 und dem Drehpunkt des Körpers K2 ist,
   - die Richtung, in die der Mittelpunkt eines Kreisbogens des Körpers K1 verschoben werden müsste, um mit dem Mittelpunkt des korrespondierenden Kreisbogens des Körpers K2 zur Deckung gebracht zu werden, die gleiche ist, in die der Drehpunkt des Körpers K1 verschoben werden muss, um mit dem Drehpunkt des Körpers K2 zur Deckung gebracht zu werden.

Auf Basis dieser Grundprinzipien lässt sich das erfindungsgemäße Verfahren zur Konstruktion von Körpern, die sich bei gleichsinniger Rotation stets in einem Punkt berühren, formulieren. Solche Körper werden nachfolgend auch als korrespondierende Körper bezeichnet.

Die Profile der korrespondierenden Körper K1 und K2 liegen in einer Ebene. Die Drehachse des Körpers K1 und die Drehachse des Körpers K2 stehen jeweils senkrecht auf der besagten Ebene, wobei die Schnittpunkte der Drehachsen mit der besagten Ebene als Drehpunkte bezeichnet werden. Der Abstand der Drehpunkte voneinander wird als Achsabstand a bezeichnet. Unter n ist im Folgenden die Kreiszahl zu verstehen (π≈ 3,14159).

In einem ersten Schritt wird das Profil des Körpers K1 erzeugt. Das Profil des Körpers K1 bedingt das Profil des Körpers K2.
- Es wird eine Anzahl n an Kreisbögen gewählt, die das Profil des Körpers K1 bilden sollen, wobei n eine ganze Zahl ist, die größer oder gleich 1 ist.
- Es wird ein Außenradius ra gewählt, wobei ra einen Wert annehmen kann, der größer als 0 (ra>0) und kleiner oder gleich dem Achsabstand (ra≤a) ist.
- Es wird ein Innenradius ri gewählt, wobei ri einen Wert annehmen kann, der größer oder gleich 0 (ri≥0) und kleiner oder gleich ra (ri≤ra) ist.
- Es werden n Kreisbögen des Körpers K1 im oder gegen den Uhrzeigersinn um die Drehachse des Körpers K1 entsprechend den nachfolgenden Anordnungsregeln angeordnet:
   ○ die Größen von n-1 Kreisbögen werden durch die wählbaren Winkel α_1, α_2, ..., α_(n-1) und die wählbaren Radien r_1, r_2, ..., r_(n-1) festgelegt, wobei die Winkel im Bogenmaß größer oder gleich 0 und kleiner oder gleich 2π und die Radien größer oder gleich 0 und kleiner oder gleich dem Achsabstand a sind,
   ○ der Winkel α_n eines letzten Kreisbogens ergibt sich dadurch, dass die Summe der n Winkel der n Kreisbögen im Bogenmaß gleich 2π ist,
   ○ der Radius r_n eines letzten Kreisbogens ergibt sich dadurch, dass dieser letzte Kreisbogen das Profil schließt,
   ○ alle Kreisbögen gehen derart tangential ineinander über, dass sich ein konvexes Profil ergibt,
   ○ ein Kreisbogen, dessen Radius gleich 0 ist, wird bevorzugt wie ein Kreisbogen behandelt, dessen Radius gleich eps ist, wobei eps eine sehr kleine positive reelle Zahl ist, die gegen 0 strebt (eps<<1, eps→0),
   ○ jeder der Kreisbögen liegt innerhalb oder auf den Grenzen eines Kreisrings mit dem Außenradius ra und dem Innenradius ri, dessen Mittelpunkt auf dem Drehpunkt des Körpers K1 liegt,
   ○ mindestens einer der Kreisbögen berührt den Außenradius ra,
   ○ mindestens einer der Kreisbögen berührt den Innenradius ri,
- Die Anzahl n' an Kreisbögen, die das Profil des Körpers K2 bilden, ihre Winkel α_1', α_2',..., α_n' und ihre Radien r_1', r_2',... , r_n' ergeben sich wie folgt:
   ○ n' = n
   ○ α_1' = α_1; α_2' = α_2; ...; α_n' = α_n
   ○ r_1' = a-r_1; r_2' = a-r_2; ...r_n'=a-r_n
- Die Positionen der n' Kreisbögen, die das Profil des Körpers K2 bilden, ergeben sich wie folgt:
   ○ der Mittelpunkt des i'-ten Kreisbogens des Profils des Körpers K2 besitzt einen Abstand vom Mittelpunkt des i-ten Kreisbogens des Profils des Körpers K1, der gleich dem Achsabstand a ist,
   ○ der Mittelpunkt des i'-ten Kreisbogens des Profils des Körpers K2 besitzt einen Abstand vom Drehpunkt des Körpers K2, der dem Abstand des Mittelpunkts des i-ten Kreisbogens des Profils des Körpers K1 von dem Drehpunkt des Körpers K1 entspricht,
   ○ die Verbindungslinie zwischen dem Mittelpunkt des i'-ten Kreisbogens des Profils des Körpers K2 und dem Mittelpunkt des i-ten Kreisbogens des Profils des Körpers K1 ist eine Parallele zu einer Verbindungslinie zwischen dem Drehpunkt des Körpers K2 und dem Drehpunkt des Körpers K1,
   ○ ein Anfangspunkt des i'-ten Kreisbogens des Profils des Körpers K2 liegt in einer Richtung bezogen auf den Mittelpunkt des i'-ten Kreisbogens des Profils des Körpers K2, die entgegengesetzt derjenigen Richtung ist, in der ein Anfangspunkt des i-ten Kreisbogens des Profils des Körpers K1 bezogen auf den Mittelpunkt des i-ten Kreisbogens des Profils des Körpers K1 liegt,
   wobei i und i' ganze Zahlen sind, die gemeinsam alle Werte im Bereich 1 bis zur Anzahl der Kreisbögen n beziehungsweise n' durchlaufen (i'=i),

Das erfindungsgemäße Verfahren lässt sich überraschenderweise allein mit Winkellineal und Zirkel auf Papier ausführen. So wird beispielsweise der tangentiale Übergang zwischen dem i-ten und dem (i+1)-ten Kreisbogen des Profils eines Körpers konstruiert, indem um den Endpunkt des i-ten Kreisbogens ein Kreis mit dem Radius r_(i+1) geschlagen wird und der näher zum Drehpunkt des Körpers gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle der Verwendung von Zeichenblock, Winkellineal und Zirkel die Profile mit Hilfe eines Computers virtuell erzeugen..

In der Praxis werden die Profile der Körper K1 und K2 zweckmäßigerweise in ein Koordinatensystem gelegt, um sie durch Angabe der Koordinaten charakteristischer Größen eindeutig und in einer für die weitere Verwendung zweckmäßigen Form beschreiben zu können. Sinnvollerweise arbeitet man mit dimensionslosen Kennzahlen. Als Bezugsgröße für geometrische Größen wie zum Beispiel Längen oder Radien bietet sich der Achsabstand a an. Für den dimensionslosen Achsabstand folgt A=a/a=1. Für den dimensionslosen Außenradius eines Profils folgt RA=ra/a. Der dimensionslose Innenradius eines Profils berechnet sich zu RI=ri/a.

Es ist zweckmäßig, den Drehpunkt eines Profils, z.B. des Profils des Körpers K1 in den Ursprung eines kartesischen Koordinatensystem zu legen (x=0, y=0) und den Drehpunkt des korrespondierenden Profils des Körpers K2 dann in den Punkt x=A=1, y=0 zu legen.

Bei Verwendung eines kartesischen Koordinatensystems mit dem Drehpunkt des Profils des Körpers K1 im Ursprung (x=0, y=0) und dem Drehpunkt des Körpers K2 im Punkt mit den Koordinaten x=A=1, y=0 und unter Verwendung dimensionsloser Größen ergibt sich die folgende bevorzugte Ausführungsform des erfindungsgemäßen Verfahrens:
- Es wird eine Anzahl n an Kreisbögen gewählt, die das Profil des Körpers K1 bilden sollen, wobei n eine ganze Zahl ist, die größer oder gleich 1 ist.
- Es wird ein Außenradius RA gewählt, der größer 0 (RA>0) und kleiner oder gleich dem Achsabstand (RA≤1) ist.
- Es wird ein Innenradius RI gewählt, der größer oder gleich 0 (RI≥0) und kleiner oder gleich RA (RI≤RA) ist.
- Es werden die 1, 2, ..., (i-1), i, (i+1), ..., (n-1), n Kreisbögen des Körpers K1 im oder gegen den Uhrzeigersinn um die Drehachse des Körpers K1 entsprechend den nachfolgenden Anordnungsregeln angeordnet, wobei i ein Index ist, der die Zahlen von 1 bis n durchläuft:
   ○ die Summe der Winkel α_i aller Kreisbögen ist gleich 2π,
   ○ der Radius R_i eines jeden Kreisbogens ist größer oder gleich 0 und kleiner oder gleich 1,
   ○ der Anfangs- und Mittelpunkt eines ersten Kreisbogens werden auf die x-Achse gelegt, wobei der Anfangspunkt in den Bereich x=RI bis x=RA gelegt wird und die x-Koordinate des Mittelpunkts kleiner oder gleich der x-Koordinate des Anfangspunkts ist,
   ○ für i<n ist der Endpunkt des i-ten Kreisbogens gleich dem Anfangspunkt des (i+1)-ten Kreisbogens,
   ○ für i=n ist der Endpunkt des i-ten Kreisbogens gleich dem Anfangspunkt des ersten Kreisbogens,
   ○ jeder der Kreisbögen geht tangential in den benachbarten Kreisbogen über, wobei ein Kreisbogen mit R_i=0 bevorzugt wie ein Kreisbogen mit R_i=eps behandelt wird, wobei eps eine sehr kleine positive reelle Zahl ist, die gegen 0 strebt (eps<<1, eps→0),
   ○ das Profil besitzt an keiner Stelle einen Abstand vom Drehpunkt, der größer als der Außenradius RA ist,
   ○ das Profil besitzt an mindestens einer Stelle einen Abstand vom Drehpunkt, der gleich dem Außenradius RA ist,
   ○ das Profil besitzt an keiner Stelle einen Abstand vom Drehpunkt, der kleiner als der Innenradius RI ist,
   ○ das Profil besitzt an mindestens einer Stelle einen Abstand vom Drehpunkt, der gleich dem Innenradius RI ist,
   ○ das Profil ist konvex,
- Das Profils des Körpers K2 ergibt sich aus dem Profil des Körpers K1 wie folgt:
   ○ n' = n
   ○ i' ein Index ist, der alle Zahlen von 1 bis n' durchläuft
   ○ α_i' = α_i für i=i'
   ○ R_i' + R_i = 1 für i=i'
   ○ das Profil wird aus n' Kreisbögen aufgebaut, die im selben Uhrzeigersinn angeordnet werden wie die Kreisbögen des Profils des Körpers K1,
   ○ der Anfangspunkt des ersten Kreisbogens des Profils des Körpers K2 ist gleich dem Anfangspunkt des ersten Kreisbogens des Profils des Körpers K1 und der Mittelpunkt des ersten Kreisbogens des Profils des Körpers K2 liegt auf der x-Achse, wobei die x-Koordinate des Mittelpunkts größer oder gleich der x-Koordinate des Anfangspunkts ist,
   ○ für i'<n' ist der Endpunkt des i'-ten Kreisbogens gleich dem Anfangspunkt des (i+1)'-ten Kreisbogens,
   ○ für i'=n' ist der Endpunkt des i'-ten Kreisbogens gleich dem Anfangspunkt des 1 '-ten Kreisbogens,
   ○ jeder der Kreisbögen geht tangential in den benachbarten Kreisbogen über, wobei ein Kreisbogen mit R_i'=0 bevorzugt wie ein Kreisbogen mit R_i'=eps behandelt wird, wobei eps eine sehr kleine positive reelle Zahl ist, die gegen 0 strebt (eps<<1, eps→0),
   ○ das Profil ist konvex.

Durch das erfindungsgemäße Verfahren lassen sich Profile für die korrespondierenden Körper K1 und K2 erzeugen, die unterschiedlich sind.

Ebenso lassen sich Profile für die korrespondierenden Körper K1 und K2 erzeugen, die gleich sind bzw. die sich durch Rotation und/oder Spiegelung ineinander überführen lassen. Solche Profile, die gleich sind oder sich durch Symmetrieoperationen ineinander überführen lassen, sind dadurch gekennzeichnet, dass sie jeweils eine Anzahl z an Symmetrieebenen aufweisen, die senkrecht auf der Ebene der Profile stehen und durch die jeweilige Drehachse des Profils laufen.

Ein jedes solches Profil lässt sich in 2*z Abschnitte unterteilen, die jeweils einen Abschnittswinkel von π/z bezogen auf den jeweiligen Drehpunkt des Profils aufweisen. Diese Abschnitte lassen sich durch Rotation und/oder durch Spiegelung an den Symmetrieebenen untereinander zur Deckung bringen. Die Zahl z wird hier und im Folgenden auch als Gangzahl bezeichnet und ist eine natürliche ganze Zahl (z = 1, 2, 3, ...).
Das Profil des Körpers K2 ergibt sich aus dem Profil des Körpers K1: bei einer ungeraden Gangzahl sind die Profile K1 und K2 identisch; bei einer geraden Gangzahl ergibt sich das Profil des Körpers K2 durch Rotation des Profils des Körpers K1 um einen Winkel von π/z.

Das Profil des Körpers K1 lässt sich wie folgt erzeugen:
- es wird eine Gangzahl z gewählt, wobei z eine ganze Zahl ist, die größer oder gleich 1 ist,
- es wird die Anzahl der Kreisbögen n so gewählt, dass sie ein ganzes Vielfaches p von 4*z ist,
- das Profil wird in 2*z Abschnitte eingeteilt, die dadurch gekennzeichnet sind, dass jeder Abschnitt durch zwei Geraden begrenzt ist, die zueinander einen Winkel im Bogenmaß von π/z bilden und die sich im Drehpunkt des Profils schneiden, wobei diese beiden Geraden als Abschnittsgrenzen bezeichnet werden,
- jeder dieser 2*z Abschnitte wird in einen ersten und einen zweiten Teil untergliedert,
- der erste Teil eines Abschnitts wird aus p Kreisbögen gebildet, die in aufsteigender oder absteigender Reihenfolge nummeriert sind,
- zu den p Kreisbögen zugehörige Winkel α_1, ..., α_p werden so gewählt, dass die Summe dieser Winkel gleich π/(2*z) ist, wobei die Winkel im Bogenmaß größer oder gleich 0 und kleiner oder gleich π/(2*z) sind,
- der zweite Teil eines Abschnitts wird aus p' Kreisbögen gebildet, die in umgekehrter Reihenfolge nummeriert sind wie die Kreisbögen des ersten Teils eines Abschnitts, wobei p' eine ganze Zahl ist, die gleich p ist,
- zu den p' Kreisbögen zugehörige Winkel α_p', ..., α_1' sind dadurch bestimmt, dass der Winkel α_j' des j'-ten Kreisbogens des zweiten Teils eines Abschnitts gleich dem Winkel α_j des j-ten Kreisbogens des ersten Teils eines Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p),
- die Summe des Radius r_j' des j'-ten Kreisbogens des zweiten Teils eines Abschnitts und des Radius r_j des j-ten Kreisbogens des ersten Teils eines Abschnitts ist gleich dem Achsabstand a, wobei j und j' ganze Zahlen sind, die gemeinsam alle Werte im Bereich 1 bis zur Anzahl der Kreisbögen p beziehungsweise p' durchlaufen (r_1'+r_1=a, ..., r_p'+r_p=a),
- ein zu dem Kreisbogen, mit dem das Profil im ersten Teil eines Abschnitts beginnt, zugehöriger Mittelpunkt und zugehöriger Anfangspunkt werden in Abhängigkeit von der Anordnung der Kreisbögen im oder gegen den Uhrzeigersinn auf eine der Abschnittsgrenzen dieses Abschnitts gelegt,
- ein zu dem Kreisbogen, mit dem das Profil im ersten Teil eines Abschnitts endet, zugehöriger Endpunkt tangiert eine Gerade FP in einem Punkt, wobei die Gerade FP senkrecht auf der Winkelhalbierenden der beiden Abschnittgrenzen dieses Abschnitts steht und einen Abstand vom Drehpunkt des Profils in Richtung dieses Abschnitts besitzt, der gleich dem halben Achsabstand ist, wobei die Winkelhalbierende wie die Abschnittsgrenzen durch den Drehpunkt führt.

Profile, die gemäß dem obigen Verfahren erzeugt werden, bestehen aus 2*z Abschnitten, die voneinander verschieden sein können. Sind die Abschnitte voneinander verschieden, so erhält man asymmetrische Profile.

Bei achsensymmetrischen Profilen lassen sich alle 2*z Abschnitte durch Spiegelung an den Abschnittsgrenzen zur Deckung bringen. Die Abschnittsgrenzen liegen dann auf den Schnittgeraden der Symmetrieebenen des jeweiligen Profils mit der Ebene, in der das Profil liegt. Dies bietet den Vorteil, dass nur ein erster Abschnitt des Profils auf die oben beschriebene Weise erzeugt werden muss. Die weiteren Abschnitte ergeben sich durch fortlaufende Spiegelung des ersten Abschnitts an den Abschnittsgrenzen.

Ferner ist es möglich, Profile zu erzeugen, die punktsymmetrisch zum Drehpunkt sind. In diesem Fall wird jeweils ein Abschnitt festgelegt, während sich der auf dem Profil gegenüber liegende Abschnitt durch Punktspiegelung des festgelegten Abschnitts am Drehpunkt ergibt. Auf diese Weise lassen sich punktsymmetrische Profile abschnittsweise erzeugen, wobei die oben genannten Anordnungsregeln befolgt werden müssen, um ein geschlossenes, konvexes Profil zu erhalten.

Schneckenelemente für Doppelschnecken- oder Mehrwellenextruder sind üblicherweise in ein Gehäuse eingebracht. Dabei sind Schneckenelemente und Gehäuse so ausgeführt, dass durch die Rotation der Schneckenelemente nicht nur eine paarweise Abschabung benachbarter Schneckenelemente erfolgt, sondern auch eine Abreinigung der Gehäuseinnenwandungen durch die Rotation der Schneckenelemente gegeben ist.
Wie beispielsweise in der Veröffentlichung [1] auf den Seiten 27 bis 30 ausgeführt, weisen Anordnungen aus Schneckenelementen und Gehäuse praktisch immer so genannte Spiele auf. Die Spiele können, wie dem Fachmann bekannt ist, zwischen Schnecke und Gehäuse und zwischen Schnecke und Schnecke unterschiedlich groß oder gleich sein. Das Spiel zwischen Schnecke und Gehäuse wird als *δ* bezeichnet, das Spiel zwischen Schnecke und Schnecke als s. Die Spiele können auch konstant oder, in den angegebenen Grenzen, variabel sein. Es ist auch möglich, innerhalb der Spiele ein Schneckenprofil zu verschieben. Dem Fachmann sind Methoden bekannt, um ausgehend von einem vorgegebenen, exakt abschabenden Schneckenprofil, ein Schneckenprofil mit Spielen abzuleiten. Bekannte Methoden hierfür sind beispielsweise die in [1] auf den Seiten 28ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert.

Auch eine exzentrische Positionierung von Schneckenelementen in einem Gehäuse unter Beibehaltung der Gehäuse- und paarweisen Abschabung ist dem Fachmann der Extrudertechnik bekannt (siehe z.B. [1] Seiten 108, 246 und 249).

Die Verwendung von Gehäusen, Spielen und/oder exzentrischer Positionierung ist auf korrespondierende Körper, die sich bei der gleichsinnigen Rotation um zwei parallel angeordnete Achsen in der Weise streifen, dass sie sich stets in mindestens einem Punkt berühren, in entsprechender Weise anwendbar.

Wie der Fachmann anhand der Ausführungen leicht versteht, ist das erfindungsgemäße Verfahren dazu geeignet, Übergangsprofile zwischen Profilen unterschiedlicher Gangzahl zu erzeugen. Ausgehend von einem z-gängigen Profil ist es möglich, die Profile der korrespondierenden Körper Schritt für Schritt so zu ändern, dass man schließlich Profile mit einer Gangzahl z' ungleich z erhält. Es ist hierbei zulässig, die Anzahl der Kreisbögen während des Übergangs zu verringern oder zu vergrößern.
Ebenso ist es möglich, Übergangsprofile zwischen Profilen gleicher Gangzahl zu erzeugen. Ausgehend von einem z-gängigen Profil ist es möglich, ein anderes z-gängiges Profil zu erhalten, indem das Profil im Übergang Schritt für Schritt geändert wird. Es ist hierbei zulässig, die Anzahl der Kreisbögen während des Übergangs zu verringern oder zu vergrößern.

Die Profile korrespondierender Körper können auf verschiedene Weisen in die dritte Dimension fortgesetzt werden, um die Körper zu erzeugen. Dies sei beispielhaft anhand von Schneckenelementen für Schneckenextruder erläutert. Schneckenelemente weisen die beschriebenen Querschnittsprofile auf, die sich bei gleichsinniger Rotation um zwei parallele benachbarte Achsen stets in einem Punkt berühren. Schneckenelemente können z.B. als Förder-, Knet- oder Mischelemente ausgeführt sein.

Ein Förderelement zeichnet sich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Um den Übergang zwischen verschiedenen Schneckenelementen zu ermöglichen, werden häufig Unterlegscheiben als Distanzhülse eingesetzt. In Sonderfällen werden sogenannte Übergangselemente eingesetzt, die einen kontinuierlichen Übergang zwischen zwei Schneckenprofilen unterschiedlicher Gangzahl ermöglichen, wobei an jedem Punkt des Übergangs ein sich selbst reinigendes Paar von Schneckenprofilen vorliegt. Übergangselemente können rechts- oder linksgängig sein. Ihre Steigung liegt bevorzugt im Bereich des 0,1-fachen bis 10-fachen des Achsabstands und ihre axiale Länge liegt bevorzugt im Bereich des 0,1-fachen bis 10-fachen des Achsabstandes.

Das erfindungsgemäße Verfahren lässt sich wie bereits ausgeführt allein mit Winkellineal und Zirkel auf Papier ausführen. Die Durchführung des erfindungsgemäßen Verfahrens auf einem Computersystem ist vorteilhaft, da die Koordinaten und Abmessungen der Profile in einer Form vorliegen, die von einem Computer weiter verarbeitet werden können.

Gegenstand der vorliegenden Erfindung ist auch ein Computerprogrammprodukt mit Programmcodemitteln zur Ausführung des erfindungsgemäßen Verfahren auf einem Computer. Das erfindungsgemäße Computerprogrammprodukt ist dadurch gekennzeichnet, dass das erfindungsgemäße Verfahren in Form von Programmcodes auf einem Datenträger gespeichert ist. Der Datenträger ist computerlesbar, sodass das erfindungsgemäße Verfahren mittels eines Computers ausgeführt werden kann, wenn das Computerprogrammprodukt auf dem Computer ausgeführt wird. Ein geeigneter Datenträger ist zum Beispiel eine Diskette, ein optischer Datenträger wie zum Beispiel eine CD, DVD, oder Blu-ray Disc, eine Festplatte, ein Flash-Speicher, ein Memory-Stick und andere. Bevorzugt weist das Computerprogrammprodukt, wenn es auf einem Computer ausgeführt wird, eine grafische Benutzeroberfläche (GUI) auf, die es einem Benutzer auf einfache Weise erlaubt, die frei wählbaren Größen zur Erzeugung von Profilen über Eingabegeräte, wie z.B. Maus und / oder Tastatur einzugeben. Weiterhin weist das Computerprogrammprodukt bevorzugt eine grafische Ausgabe auf, mittels derer die berechneten Profile auf einem grafischen Ausgabegerät wie z.B. Bildschirm und / oder Drucker visualisiert werden können. Bevorzugt weist das Computerprogrammprodukt die Möglichkeit auf, berechnete Profile zu exportieren, d.h. in Form von speicherbaren Datensätzen, welche die geometrischen Maße der berechneten Körper umfassen, für weitere Verwendungszwecke entweder auf einem Datenträger zu speichern oder an ein angeschlossenes Gerät zu übertragen. Insbesondere ist das Computerprogrammprodukt so gestaltet, dass es, wenn es auf einem Computer ausgeführt wird, sowohl Profile als auch aus den Profilen generierte Körper berechnen und die berechneten Geometrien in einem Format ausgeben kann, die von einer Maschine zur Herstellung solcher Körper z.B. einer Fräsmaschine verwendet werden kann, um reale Körper herzustellen. Solche Formate sind dem Fachmann bekannt.

Nachdem die Profile auf die beschriebene Weise erzeugt worden sind, können die Körper z.B. mit einer Fräsmaschine, einer Drehmaschine oder einer Wirbelmaschine erzeugt werden. Bevorzugte Materialien zur Erzeugung solcher Körper sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, ingenieurkeramische Werkstoffe wie z.B. Zirkonoxid oder Siliziumcarbid.

Die vorliegende Erfindung erlaubt die Erzeugung von Profilen korrespondierender Körper *ab initio.* Im Gegensatz zum Stand der Technik geht das erfindungsgemäße Verfahren nicht von bestehenden Profilen aus, sondern erlaubt die Erzeugung beliebiger Profile, indem die Werte charakteristischer Größen wie z.B. Achsabstand und Zahl der Kreisbögen, aus denen die Profile aufgebaut werden sollen, gewählt werden und die Profile Schritt für Schritt unter Beachtung einfacher Regeln generiert werden. Das erfindungsgemäße Verfahren ist einfach anwendbar und lässt sich sogar mit Zirkel und Winkellineal ausführen, ohne dass komplizierte Berechnungen nötig sind. Das erfindungsgemäße Verfahren ist allgemeingültig, d.h. es ist zum Beispiel nicht auf eine konkrete Gangzahl beschränkt, sondern es ist sogar möglich, durch Variation von Werten Profile zu erzeugen, die von einer Gangzahl in einer andere übergehen. Ferner erlaubt die Erfindung die Erzeugung von symmetrischen und asymmetrischen Profilen. Es ist auch möglich, Profile zu erzeugen, bei denen die korrespondierenden Profile verschieden sind, d.h. nicht zur Deckung gebracht werden können.

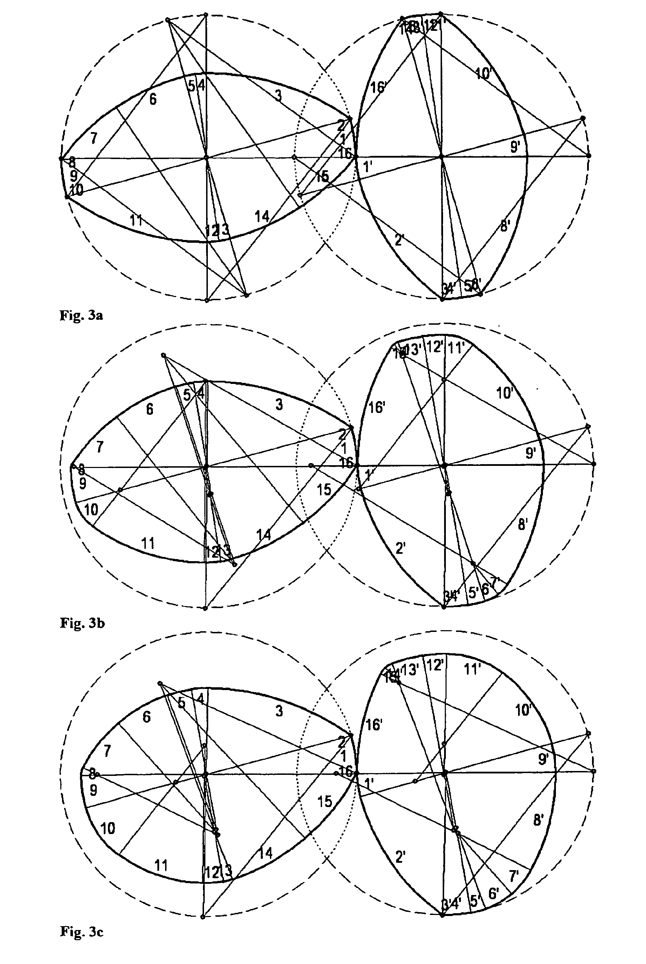

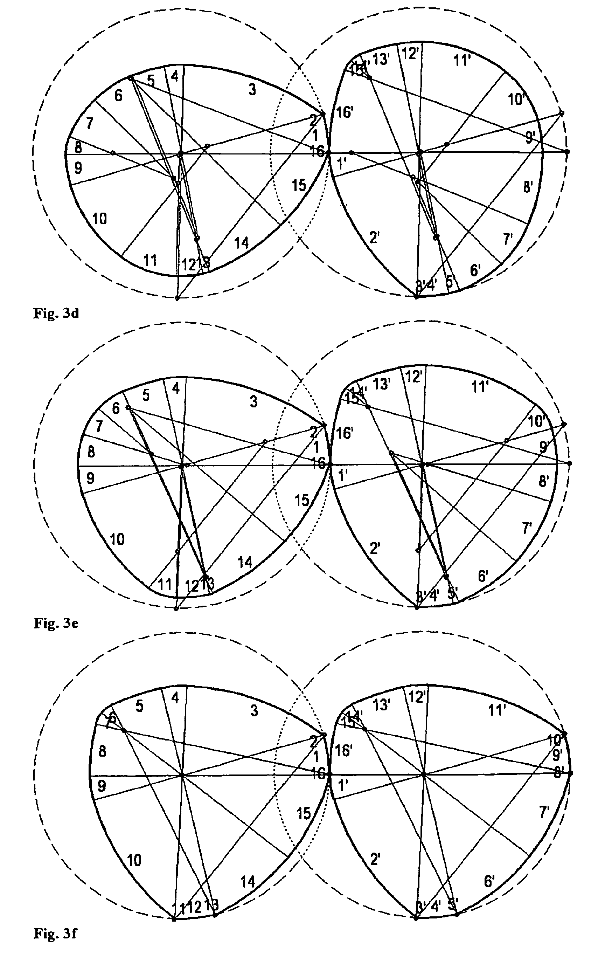

Die Erfindung wird nachstehend anhand der Figuren beispielhaft näher erläutert, ohne sie jedoch auf diese zu beschränken. Die Figuren 3 bis 8 wurden mit Hilfe eines Computerprogramms erzeugt.

In den Beispielen werden dimensionslose Kennzahlen verwendet. Als Bezugsgröße für Längen und Radien wird der Achsabstand verwendet. Für den dimensionslosen Achsabstand folgt A=a/a=1. Für den dimensionslosen Außenradius eines Profils folgt RA=ra/a. Der dimensionslose Innenradius eines Profils berechnet sich zu RI=ri/a.

In den Figuren werden alle geometrischen Größen in ihrer dimensionslosen Form verwendet. Alle Winkelangaben erfolgen im Bogenmaß.

Das erfindungsgemäße Verfahren wird anhand der Figur 3 näher erläutert, ohne das Verfahren jedoch auf diese Figur zu beschränken.

Die Figuren 3a bis 3f zeigen den Übergang von einem Paar zweigängiger Profile auf ein Paar eingängiger Profile. Alle diese Figuren weisen den gleichen Aufbau auf, der nachfolgend im Detail beschrieben wird. Das erzeugende Profil des Körpers K1 wird durch das linke Profil dargestellt. Das Profil des korrespondierenden Körpers K2 wird durch das rechte Profil dargestellt. Beide Profile bestehen aus 16 Kreisbögen. Die Kreisbögen sind durch dicke, durchgezogene Linien gekennzeichnet, die mit den jeweiligen Nummern der Kreisbögen versehen sind. Bedingt durch die Vielzahl der Kreisbögen und bedingt durch die Erzeugung der Figuren mittels eines Computerprogramms kann es vorkommen, dass sich die Nummern einzelner Kreisbögen überlappen und daher schlecht lesbar sind, siehe zum Beispiel die Kreisbögen 3', 4' und die Kreisbögen 5', 6', 7' in Figur 3a. Trotz der teilweisen schlechten Lesbarkeit einzelner Nummern, wird der Aufbau der Profile aus dem Zusammenhang in Verbindung mit dieser Beschreibung dennoch deutlich.

Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Der Außenradius ist jeweils für das Profil des Körpers K1 und des Körpers K2 gleich groß.

Die Figur 3a zeigt ein Paar von zweigängigen Profilen, mit denen der Übergang gestartet wird. Die Profile sind zueinander symmetrisch. Die Kreisbögen 1 und 9 des Profils des Körpers K1 berühren auf ihrer gesamten Länge den Außenradius. Die Kreisbögen 4, 5 und 12, 13 berühren auf ihrer gesamten Länge den Innenradius. Die Kreisbögen 4', 5' und 12', 13' des Profils des Körpers K2 berühren auf ihrer gesamten Länge den Außenradius. Die Kreisbögen 1' und 9' berühren auf ihrer gesamten Länge den Innenradius.

Die Figur 3f zeigt ein Paar von eingängigen Profilen, mit denen der Übergang endet. Das Profil des Körpers K1 und das Profil des Körpers K2 sind zueinander symmetrisch. Die Kreisbögen 1 und 12 des Körpers K1 berühren auf ihrer gesamten Länge den Außenradius. Die Kreisbögen 4 und 9 des Körpers K1 berühren auf ihrer gesamten Länge den Innenradius. Die Kreisbögen 4' und 9' des Körpers K2 berühren auf ihrer gesamten Länge den Außenradius. Die Kreisbögen 1' und 12' des Körpers K2 berühren auf ihrer gesamten Länge den Innenradius.

Die Figur 3b zeigt ein Paar von Übergangsprofilen, bei denen der Übergang von den zweigängigen Profilen zu den eingängigen Profilen zu 20% vollzogen ist. Die Figur 3c zeigt ein Paar von Übergangsprofilen, bei denen der Übergang zu 40% vollzogen ist. Die Figur 3d zeigt ein Paar von Übergangsprofilen, bei denen der Übergang zu 60% vollzogen ist. Die Figur 3e zeigt ein Paar von Übergangsprofilen, bei denen der Übergang zu 80% vollzogen ist.

Der Übergang erfolgt dergestalt, dass immer der Kreisbogen 1 des Profils des Körpers K1 auf seiner gesamten Länge den dimensionslosen Außenradius RA berührt, wodurch der zugehörige Kreisbogen 1' des Profils des Körpers K2 auf seiner gesamten Länge den dimensionslosen Innenradius RI' berührt. Der Übergang erfolgt dergestalt, dass immer der Kreisbogen 4' des Körpers K2 den dimensionslosen Außenradius RA' berührt, wodurch der zugehörige Kreisbogen 4 des Körpers K1 den dimensionslosen Innenradius RI berührt. Aus den Figuren 3b bis 3e ist ersichtlich, dass die Profile von K1 und K2 asymmetrisch sind.

Die Figur 3 zeigt Übergangsprofile, in denen die dimensionslosen Außenradien RA und RA' im Bereich von 0,6146 bis 0,6288 liegen. Das erfindungsgemäße Verfahren ist nicht auf diesen Bereich des dimensionslosen Außenradius limitiert. Unter Anwendung des erfindungsgemäßen Verfahrens können Profile mit einem dimensionslosen Außenradius zwischen RA größer 0 und RA kleiner oder gleich 1, bevorzugt im Bereich von RA=0,52 bis RA=0,707 erzeugt werden.
Das erfindungsgemäße Verfahren soll beispielhaft an dem Paar von Profilen in Figur 3d erläutert werden.

Die Profile der Körper K1 und liegen in einer Ebene. Der Einfachheit halber wird diese Ebene in die xy-Ebene eines kartesischen Koordinatensystems gelegt. Ebenfalls der Einfachheit halber wird der Drehpunkt des Profils des Körpers K1 in den Ursprung des kartesischen Koordinatensystems gelegt (x=0, y=0). Der dimensionslose Achsabstand zwischen den beiden Drehpunkten des Körpers K1 und K2 beträgt A=1. Der Drehpunkt des Körpers K2 auf die Koordinate x=A=1, y=0 gelegt.

In einem ersten Schritt wird das Profil des Körpers K1 erzeugt, aus dem das Profil des Körpers K2 abgeleitet werden kann.
Die Anzahl der Kreisbögen n des Profils von Körper K1 wird so gewählt, dass n größer oder gleich 1 ist. In dem vorliegendem Beispiel ist n=16. Der dimensionslose Außenradius RA wird so gewählt, dass er größer 0 und kleiner oder gleich dem dimensionslosen Achsabstand A ist. In dem vorliegenden Beispiel ist RA=0,6203. Der dimensionslose Innenradius RI wird so gewählt, dass er größer oder gleich 0 und kleiner oder gleich dem dimensionslosen Außenradius RA ist. In dem vorliegenden Beispiel ist RI=0,3798.

Die Kreisbögen können im oder gegen den Uhrzeigersinn um die Drehachse angeordnet werden. In dem vorliegenden Beispiel werden die Kreisbögen gegen den Uhrzeigersinn um die Drehachse angeordnet.

Der Winkel α_1 des 1. Kreisbogens wird so gewählt, dass er im Bogenmaß größer oder gleich 0 und kleiner oder gleich 2π ist. In dem vorliegenden Beispiel ist α_1=0,2744. Der dimensionslose Radius R_1 des 1. Kreisbogens wird so gewählt, dass er größer oder gleich 0 und kleiner oder gleich dem dimensionslosen Achsabstand A ist. In dem vorliegenden Beispiel ist R_1=RA=0,6203. Die Position des 1. Kreisbogens wird so gewählt, dass der 1. Kreisbogen innerhalb oder auf den Grenzen eines Kreisrings mit dem dimensionslosen Außenradius RA und dem dimensionslosen Innenradius RI liegt, dessen Mittelpunkt auf dem Drehpunkt liegt. Die Position wird bevorzugt durch die Positionierung des Anfangspunkts und des Mittelpunkts des 1. Kreisbogens festgelegt. In dem vorliegenden Beispiel wird der Anfangspunkt des 1. Kreisbogens auf die Koordinate x=RA=0,6203, y=0,0000 und der Mittelpunkt des 1. Kreisbogens auf die Koordinate Mx_1=0,0000, My_1=0,0000 gelegt. Damit liegt der 1. Kreisbogen auf dem Außenradius RA und die Anordnungsregel, dass mindestens ein Kreisbogen den Außenradius RA berührt, ist erfüllt.

Die Winkel α_2, ..., α_(n-1) von n-2 weiteren Kreisbögen, also 14 weiteren Kreisbögen werden erfindungsgemäß so gewählt, dass sie im Bogenmaß größer oder gleich 0 und kleiner oder gleich 2π sind. In dem vorliegenden Beispiel werden die Winkel dieser 14 weiteren Kreisbögen zu α_2=0,6330, α_3=0,6330, α_4=0,2208, α_5=0,1864, α_6=0,4003, α_7=0,4003, α_8=0,3934, α_9=0,2744, α_10=0,6330, α_11=0,6330, α_12=0,2208, α_13=0,1864, α_14=0,4143 und α_15=0,4143 gewählt. Die dimensionslosen Radien R_2, ..., R_(n-1) dieser 14 weiteren Kreisbögen werden erfindungsgemäß so gewählt, dass sie größer oder gleich 0 und kleiner oder gleich dem dimensionslosen Achsabstand A sind. In dem vorliegenden Beispiel werden die dimensionslosen Radien dieser weiteren 14 Kreisbögen zu R_2=0,0000, R_3=1,0000, R_4=0,3797, R_5=0,7485, R_6=0,4726, R_7=0,4726, R_8=0,1977, R_9=0,4827, R_10=0,6000, R_11=0,4000, R_12=0,5173, R_13=0,1485, R_14=0,8887 und R_15=0,8887 gewählt.

Gemäß den Anordnungsregeln werden die Kreisbögen so angeordnet, dass die Kreisbögen derart tangential ineinander übergehen, dass sich ein geschlossenes, konvexes Profil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps<<1 , eps→0).
Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Profil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Profil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 14 weiteren Kreisbögen: Mx_2=0,5971, My_2=0,1681, Mx_3=-0,0187, My_3=-0,6198, Mx_4=0,0001, My_4=0,0002, Mx_5=0,0699, My_5=-0,3619, Mx_6=-0,0316, My_6=-0,1054, Mx_7=-0,0316, My_7=-0,1054, Mx_8=-0,2855, My_8=0,0000, Mx_9=-0,0005, My_9=0,0000, Mx_10=0,1124, My_10=0,0318, Mx_11=-0,0107, My_11=-0,1258, Mx_12=-0,0072, My_12=-0,0086, Mx_13=0,0626, My_13=-0,3707, Mx_14=-0,2097, My_14=0,3176, Mx_15=-0,2097, My_15=0,3176. Der Endpunkt des 4. Kreisbogens bzw. der Anfangspunkt des 5. Kreisbogens liegt auf dem dimensionslosen Innenradius RI und die Anordnungsregel, dass mindestens ein Kreisbogen den dimensionslosen Innenradius RI berührt, ist somit erfüllt.

Der Winkel α_16 des letzten Kreisbogens ergibt sich erfindungsgemäß daraus, dass die Summe der Winkel der 16 Kreisbögen im Bogenmaß gleich 2π ist, wobei der Winkel α_16 im Bogenmaß größer oder gleich 0 und kleiner oder gleich 2π ist. In dem vorliegenden Beispiel ergibt sich der Winkel dieses letzten Kreisbogens zu α_16=0,3654. Der dimensionslose Radius R_16 des letzten Kreisbogens ergibt sich erfindungsgemäß daraus, dass dieser letzte Kreisbogen das Profil schließt. Da der Endpunkt des 15. Kreisbogens gleich dem Anfangspunkt des ersten Kreisbogens ist, ergibt sich der Radius des 16. Kreisbogens zu R_16=0,0000. Der Mittelpunkt des 16. Kreisbogen liegt damit in den Koordinaten Mx_16=0,6203, My_16=0,0000.

Die Anordnungsregel, dass alle Kreisbögen innerhalb oder auf den Grenzen eines Kreisrings mit dem dimensionslosen Außenradius RA und dem dimensionslosen Innenradius RI liegen, dessen Mittelpunkt auf dem Drehpunkt des Profils liegt, ist durch die im vorliegenden Beispiel getroffene Wahl der Winkel und Radien der 16 Kreisbögen und deren Positionierung ebenfalls erfüllt

Das Profil des korrespondierenden Körpers K2 ergibt sich aus dem Profil des Körpers K1. Die Anzahl der Kreisbögen n' des Profils des Körpers K2 ist erfindungsgemäß gleich der Anzahl der Kreisbögen n des Profils des Körpers K1 In dem vorliegendem Beispiel ist n'=16. Der dimensionslose Außenradius RA' ist erfindungsgemäß gleich der Differenz des dimensionslosen Achsabstandes A minus des dimensionslosen Innenradius RI des Profils des Körpers K1. In dem vorliegenden Beispiel ergibt sich der dimensionslose Außenradius RA' zu RA'=A-RI=0,6202. Der dimensionslose Innenradius RI' ist erfindungsgemäß gleich der Differenz des dimensionslosen Achsabstandes A minus des dimensionslosen Außenradius RA. In dem vorliegenden Beispiel ergibt sich der dimensionslose Innenradius zu RI'=A-RA=0,3797.

Der Winkel α_i' des i'-ten Kreisbogens des Profils des Körpers K2 ist erfindungsgemäß gleich dem Winkel α_i des i-ten Kreisbogens des Profils des Körpers K1, wobei i und i' ganze Zahlen sind, die gemeinsam alle Werte im Bereich von 1 bis zur Anzahl der Kreisbögen n beziehungsweise n' durchlaufen. In dem vorliegenden Beispiel ergeben sich die Winkel der 16 Kreisbögen zu α_1'=α_1=0,2744, α_2'=α_2=0,6330, α_3'=α_3=0,6330, α_4'=α_4=0,2208, α_5'=α_5=0,1864, α_6'=α_6=0,4003, α_7'=α_7=0,4003, α_8'=α_8=0,3934, α_9'=α_9=0,2744, α_10'=-α_10=0,6330, α_11'=α_11=0,6330, α_12'=α_12=0,2208, α_13'=α_13=0,1864, α_14'=α_14=0,4143, α_15'=α_15=0,4143 und α_16'=α_16=0,3654.

Die Summe des dimensionslosen Radius R_i' des i'-ten Kreisbogens des Profils des Körpers K2 und des dimensionslosen Radius R_i des i-ten Kreisbogens des Profils des Körpers K1 ist erfindungsgemäß gleich dem dimensionslosen Achsabstand A, wobei i und i' ganze Zahlen sind, die gemeinsam alle Werte im Bereich 1 bis zur Anzahl der Kreisbögen n beziehungsweise n' durchlaufen (R-1'+ R_1=A=1, ..., R_n'+ R_n=A=1). In dem vorliegenden Beispiel ergeben sich die Radien der 16 Kreisbögen zu R_1'=A-R_1=1-0,6203=0,3797, R_2'=A-R_2=1-0,0000=1,0000, R_3'=A-R_3=1-1,0000=0,0000, R_4'=A-R_4=1-0,3797=0,6203, R_5'=A-R_5=1-0,7485=0,2515, R_6'=A-R_6=1-0,4726=0,5274, R_7'=A-R_7=1-0,4726=0,5274, R_8'=A-R_8=1-0,1977=0,8023, R_9'=A-R_9=1-0,4827=0.5173, R_10'=A-R_10=1-0,6000=0,4000, R_11'=A-R_11=1-0,4000=0,6000, R_12'=A-R_12=1-0,5173=0,4827, R_13'=A-R_13=1-0,1485=0,8515, R_14'=A-R_14=1-0,8887=0,1113 R_15'=A-R_15=1-0,8887=0,1113 und R_16'=A-R_16=1-0,0000=1,0000.

Der Mittelpunkt des i'-ten Kreisbogens des Profils des Körpers K2 besitzt erfindungsgemäß einen Abstand von dem Mittelpunkt des i-ten Kreisbogens des Profils des Körpers K1, der gleich dem dimensionslosen Achsabstand A ist, und der Mittelpunkt des i'-ten Kreisbogens besitzt erfindungsgemäß einen Abstand von dem Drehpunkt des Körpers K2, der gleich dem Abstand des Mittelpunkts des i-ten Kreisbogens des Profils des Körpers K1 von dem Drehpunkt des Körpers K1 ist, und die Verbindungslinie zwischen dem Mittelpunkt des i'ten Kreisbogens und dem Mittelpunkt des i-ten Kreisbogens ist erfindungsgemäß eine Parallele zu einer Verbindungslinie zwischen dem Drehpunkt des Körpers K2 und dem Drehpunkt des Körpers K1, wobei i und i' ganze Zahlen sind, die gemeinsam alle Werte im Bereich 1 bis zur Anzahl der Kreisbögen n beziehungsweise n' durchlaufen (i'=i). Durch die Positionierung des Drehpunktes des Körpers K1 in den Punkt x=0, y=0 und durch die Positionierung des Drehpunktes des Körpers K2 in den Punkt x=A=1, y=0 ergibt sich die x-Koordinate eines Kreismittelpunkts Mx_i' aus der Addition der x-Koordinate des Kreismittelpunkts Mx_i plus des dimensionslosen Achsabstandes A und die y-Koordinate des Kreismittelpunkts My_i' ist gleich der y-Koordinate des Kreismittelpunkts My_i. In dem vorliegenden Beispiel ergeben sich die Positionen der Mittelpunkte der 16 Kreisbögen des Profils des Körpers K2 zu Mx_1'=1,0000, My_1'=0,0000, Mx_2'=1,5971, My_2'=0,1681, Mx_3'=0,9813, My_3'=-0,6198, Mx_4'=1,0001, My_4'=0,0002, Mx_5'=1,0699, My_5'=-0,3619, Mx_6'=0,9684, My_6'=-0,1054, Mx_7'=0,9684, My_7'=0,1054, Mx_8'=0,7145, My_8'=0,0000, Mx_9'=0,9995, My_9'=0,0000, Mx_10'=1,1124, My_10'=0,0318, Mx_11'=0,9893, My_11'=-0,1258, Mx_12'=0,9928, My_12'=-0,0086, Mx_13'=1,0626, My_13'=0,3707, Mx_14'=0,7903, My_14'=0,3176, Mx_15'=0,7903, My_15'=0,3176 und Mx_16'=1,6203, My_16'=0,0000.

Ein Anfangspunkt des i'-ten Kreisbogens liegt erfindungsgemäß in einer Richtung bezogen auf den Mittelpunkt des i'-ten Kreisbogens, die entgegengesetzt derjenigen Richtung ist, die ein Anfangspunkt des i-ten Kreisbogens bezogen auf den Mittelpunkt des i-ten Kreisbogens besitzt, wobei i und i' ganze Zahlen sind, die gemeinsam alle Werte im Bereich 1 bis zur Anzahl der Kreisbögen n beziehungsweise n' durchlaufen (i'=i). In dem vorliegenden Beispiel liegt daher beispielsweise der Anfangspunkt des Kreisbogens 1' des Profils des Körpers K2 auf der Koordinate x=0,6203, y=0.

Aus dem erfindungsgemäßen Verfahren folgt, dass alle 16 Kreisbögen des Profils des Körpers K2 tangential ineinander übergehen und ein geschlossen, konvexes Profil bilden. Auch liegen alle 16 Kreisbögen innerhalb oder auf den Grenzen eines Kreisrings mit dem dimensionslosen Außenradius RA' und dem dimensionslosen Innenradius RI', dessen Mittelpunkt auf dem Drehpunkt des Körpers K2 liegt. Ferner liegt der Kreisbogen 1' auf dem dimensionslosen Innenradius RI' und die Anordnungsregel, dass mindestens ein Kreisbogen den dimensionslosen Innenradius RI' berührt, ist erfüllt. Ferner liegt der Endpunkt des Kreisbogens 4' bzw. der Anfangspunkt des Kreisbogens 5' auf dem dimensionslosen Außenradius RA' und die Anordnungsregel, dass mindestens ein Kreisbogen den dimensionslosen Außenradius RA' berührt, ist erfüllt.

Aus dem erfindungsgemäßen folgt für symmetrische Profile mit einer Gangzahl z, dass jeder der Abschnitte derart aufgebaut ist, das die Radien der Kreisbögen des Profils des Körpers K2 in umgekehrter Reihenfolge gleich den Radien der Kreisbögen des Profils des Körpers K1 sind. Wie der Fachmann erkennt, lassen sich die Profilabschnitte des durch Rotation und Spiegeln zur Deckung bringen. In den nachfolgenden Figuren, die Abschnitte von Profilen behandeln, wird daher häufig nicht mehr zwischen dem Profil des Körpers K1 und dem Profil des Körpers K2 unterschieden, sondern nur noch von einem Profil gesprochen.

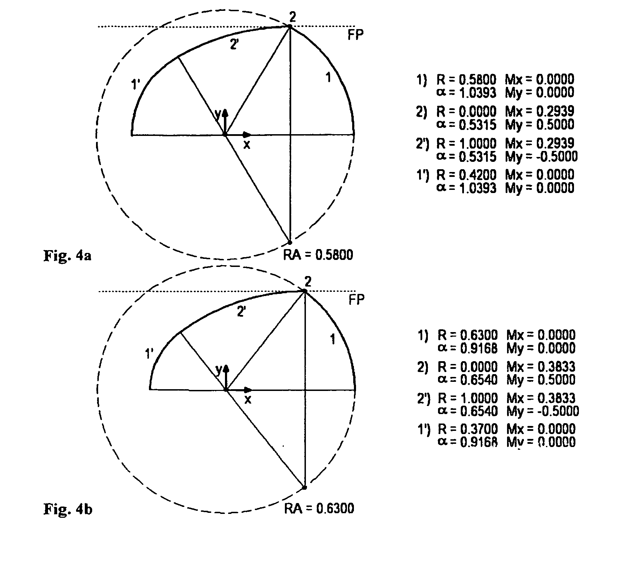

Figuren 4a und 4b zeigen nach dem erfindungsgemäßen Verfahren erhaltene Profile mit der Gangzahl 1. Es wird immer die Hälfte und damit ein Abschnitt eines Profils der Gangzahl 1 gezeigt. Ein Großteil der Figuren weist den gleichen Aufbau auf, der nachfolgend im Detail beschrieben wird. In der Mitte der Figuren liegt das xy-Koordinatensystem, in dessen Ursprung sich der Drehpunkt des Profils befindet. Die Kreisbögen des Profils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der Schneckenaußenradius RA wird durch eine dünne, gestrichelte Linie charakterisiert, dessen Zahlenwert rechts unten in der Figur auf vier signifikante Stellen angegeben wird. Rechts neben den Figuren werden zu jedem Kreisbogen der Radius R, der Winkel α und die x- und y-Koordinate des Kreisbogenmittelpunkts Mx und My jeweils auf vier signifikante Stellen angegeben. Durch diese Angaben ist das Profil eindeutig definiert.

Die Figuren 4a und 4b zeigen Profile, in denen der dimensionslose Außenradius RA die Werte 0,58 und 0,63 hat.

Profile, bei denen ein Abschnitt des Profils aus insgesamt h Kreisbögen besteht, werden nachfolgend als h-Kreis-Profile bezeichnet. D.h. bei einem Profil, dass in dem Abschnitt aus beispielsweise 2 Kreisbögen besteht, wird von einem 2-Kreis-Profil gesprochen.

Figur 4: Die Figuren 4a und 4b zeigen 4-Kreis-Profile. Die Figuren 4a und 4b unterscheiden sich durch den Außenradius RA. In der Figur 4a beträgt der Außenradius RA=0,58. In der Figur 4b beträgt der Außenradius RA=0,63. In den Figuren 4a und 4b besitzt der 1. Kreisbogen jeweils den Radius R_1=RA. In den Figuren 4a und 4b besitzt der 2. Kreisbogen jeweils den Radius R_2=0. In den Figuren 4a und 4b ist der Winkel α_1 des 1. Kreisbogens vom Außenradius RA abhängig. In den Figuren 4a und 4b ist der Winkel α_2 des 2. Kreisbogens vom Außenradius RA abhängig.

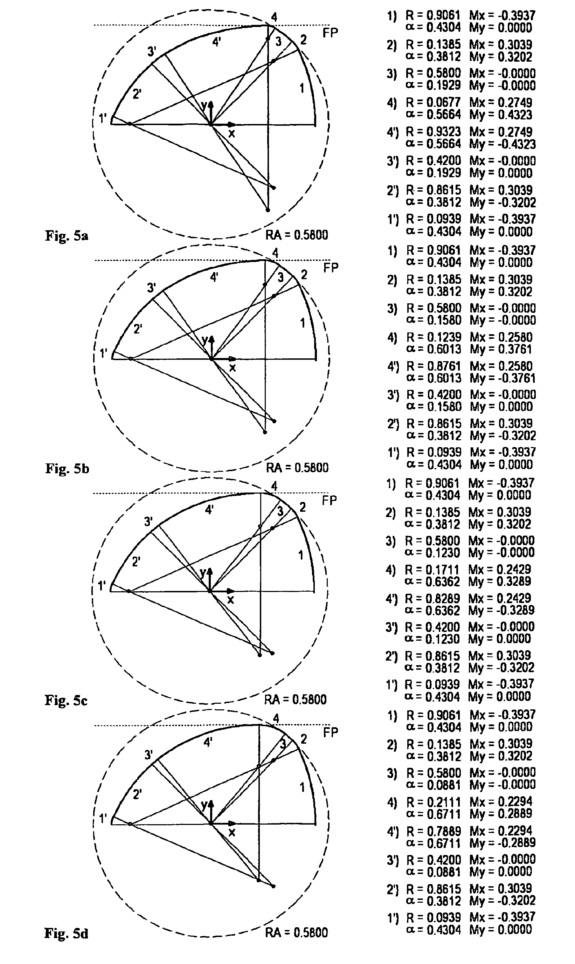

Figur 5: Die Figuren 5a bis 5d zeigen 8-Kreis-Profile. In den Figuren 5a bis 5d beträgt der Schneckenaußenradius jeweils RA=0,58. In den Figuren 5a bis 5d besitzt der 1. Kreisbogen jeweils den Radius R_1=0,9061. In den Figuren 5a bis 5d besitzt der 2. Kreisbogen jeweils den Radius R_2=0,1385. In den Figuren 5a bis 5d besitzt der 3. Kreisbogen jeweils den Radius R_3=RA und liegt auf Außenradius. In den Figuren 5a bis 5d wird der Radius R_4 des 4. Kreisbogens schrittweise vergrößert. In den Figuren 5a bis 5d besitzt der 1. Kreisbogen jeweils den Winkel α_1=0,4304. In den Figuren 5a bis 5d besitzt der 2. Kreisbogen jeweils den Winkel α_2=0,3812. In den Figuren 5a bis 5d wird der Winkel α_3 des 3. Kreisbogens schrittweise verringert und der Winkel α_4 des 4. Kreisbogens schrittweise vergrößert.

Das Profil und damit auch der gezeigte Abschnitt des Profils liegen erfindungsgemäß in einer Ebene. Der Einfachheit halber wird diese Ebene in die xy-Ebene eines kartesischen Koordinatensystems gelegt. Ebenfalls der Einfachheit halber wird der Drehpunkt des Profils in den Ursprung des kartesischen Koordinatensystems gelegt (x=0, y=0).

Die Gangzahl z wird erfindungsgemäß so gewählt, dass z größer oder gleich 1 ist. In dem vorliegenden Beispiel wird die Gangzahl zu z=1 gewählt. Die Anzahl der Kreisbögen n des Profils wird erfindungsgemäß so gewählt, dass n ein ganzes Vielfaches p von 4*z ist. In dem vorliegendem Beispiel wird die Anzahl der Kreisbögen zu n=16 gewählt, woraus p=4 resultiert. Der dimensionslose Außenradius RA wird erfindungsgemäß so gewählt, dass er größer 0 und kleiner oder gleich dem dimensionslosen Achsabstand A ist. In dem vorliegenden Beispiel wird der dimensionslose Außenradius zu RA=0,58 gewählt. Der dimensionslose Innenradius RI wird erfindungsgemäß so gewählt, dass er größer oder gleich 0 und kleiner oder gleich dem dimensionslosen Außenradius RA ist. In dem vorliegenden Beispiel wird der dimensionslose Innenradius zu RI=A-RA=0,42 gewählt.

Die Kreisbögen des Profils können im oder gegen den Uhrzeigersinn um die Drehachse des Profils angeordnet werden. In dem vorliegenden Beispiel werden die Kreisbögen gegen den Uhrzeigersinn um die Drehachse angeordnet.

Das Profil wird in 2*z Abschnitte eingeteilt, die dadurch gekennzeichnet sind, dass jeder Abschnitt durch zwei Geraden begrenzt ist, die zueinander einen Winkel im Bogenmaß von π/z bilden und die sich im Drehpunkt des Profils schneiden, wobei diese beiden Geraden als Abschnittsgrenzen bezeichnet werden. In dem vorliegenden Beispiel ergibt sich, dass das Profil in zwei Abschnitte unterteilt wird. Der Einfachheit halber werden beide Abschnittsgrenzen auf die x-Achse des Koordinatensystems gelegt. In dem vorliegenden Beispiel wird im Folgenden nur der Abschnitt des Profils betrachtet, der in positiver y-Richtung liegt.

Der Abschnitt des Profils wird in einen ersten und einen zweiten Teil untergliedert, wobei der erste Teil aus p Kreisbögen und der zweite Teil aus p' Kreisbögen besteht, wobei p'=p ist. In dem vorliegenden Beispiel ist p=p'=4. Die Kreisbögen des ersten Teils des Abschnitts des Profils können in aufsteigender oder absteigender Reihenfolge nummeriert sein. Die Kreisbögen des zweiten Teils des Abschnitts sind in umgekehrter Reihenfolge wie die Kreisbögen des ersten Teils des Abschnittes nummeriert. In dem vorliegenden Beispiel werden die Kreisbögen des ersten Teils des Abschnitts in aufsteigender Reihenfolge, die Kreisbögen des zweiten Teils des Abschnitts in absteigender Reihenfolge nummeriert.

Der Winkel α_1 des 1. Kreisbogens des ersten Teils des Abschnitts wird erfindungsgemäß so gewählt, dass er im Bogenmaß größer oder gleich 0 und kleiner oder gleich π/(2*z) ist. In dem vorliegenden Beispiel wird der Winkel des 1. Kreisbogens zu α_1=0,4304 gewählt. Der dimensionslose Radius R_1 des 1. Kreisbogens des ersten Teils des Abschnitts wird erfindungsgemäß so gewählt, dass er größer oder gleich 0 und kleiner oder gleich dem Achsabstand A ist. In dem vorliegenden Beispiel wird der dimensionslose Radius des 1. Kreisbogens zu R_1=0,9061 gewählt. Die Position des 1. Kreisbogens des ersten Teils des Abschnitts wird erfindungsgemäß so gewählt, dass der 1. Kreisbogen innerhalb oder auf den Grenzen eines Kreisrings mit dem dimensionslosen Außenradius RA und dem dimensionslosen Innenradius RI liegt, dessen Mittelpunkt auf dem Drehpunkt des Profils liegt. Die Position wird bevorzugt durch die Positionierung des Anfangspunkts und des Mittelpunkts des 1. Kreisbogens festgelegt. In dem erfindungsgemäßen Verfahren liegen der Anfangs- und der Mittelpunkt des 1. Kreisbogens auf einer der Abschnittsgrenzen, wodurch sich der Anfangspunkt aus der Position des Mittelpunkts und des dimensionslosen Radius R_1 ergibt. In dem vorliegenden Beispiel wird der Mittelpunkt des 1. Kreisbogens auf die Koordinate Mx_1=-0,3937, My_1=0,0000 gelegt und der Anfangspunkt liegt damit auf der Koordinate x=0,5124, y=0,0000.

Die Winkel α_2, ..., α_(p-1) von p-2 weiteren Kreisbögen, also von 2 weiteren Kreisbögen des ersten Teils des Abschnitts des Profils werden erfindungsgemäß so gewählt, dass sie im Bogenmaß größer oder gleich 0 und kleiner oder gleich π/(2*z) sind. In dem vorliegenden Beispiel werden die Winkel der 2 weiteren Kreisbögen zu α_2=0,3812 und α_3=0,1580 gewählt. Die dimensionslosen Radien R_2, ..., R_(p-1) der 2 weiteren Kreisbögen des ersten Teils des Abschnitts des Profils werden erfindungsgemäß so gewählt, dass sie größer oder gleich 0 und kleiner oder gleich dem dimensionslosen Achsabstand A sind. In dem vorliegenden Beispiel werden die dimensionslosen Radien der 2 weiteren Kreisbögen zu R_2=0,1385 und R_3=0,5800 gewählt. Gemäß den Anordnungsregeln werden die Kreisbögen so angeordnet, dass die Kreisbögen derart tangential ineinander übergehen, dass sich ein geschlossenes, konvexes Profil ergibt, wobei ein Kreisbogen, dessen dimensionsloser Radius gleich 0 ist, wie ein Kreisbogen behandelt wird, dessen dimensionsloser Radius gleich eps ist, wobei eps eine sehr kleine positive reelle Zahl ist, die gegen 0 strebt (eps<<1, eps→0). Aus dieser Anordnungsregel folgt, dass der Endpunkt eines Kreisbogens gleich dem Anfangspunkt seines nachfolgenden Kreisbogens ist. Der geforderte tangentiale Übergang zwischen einem ersten Kreisbogen und einem zweiten, nachfolgenden Kreisbogen wird dadurch erfüllt, dass der Mittelpunkt dieses zweiten, nachfolgenden Kreisbogens so auf die Gerade, die durch den Endpunkt und den Mittelpunkt dieses ersten Kreisbogens gegeben ist, gelegt wird, dass der Abstand des Mittelpunkts dieses zweiten, nachfolgenden Kreisbogens von dem Endpunkt dieses ersten Kreisbogens gleich dem Radius dieses zweiten, nachfolgenden Kreisbogens ist und das Profil konvex ist. Ein Kreisbogen, dessen Radius gleich 0 ist, wird wie ein Kreisbogen mit einem sehr kleinen Radius eps behandelt, wobei eps gegen 0 strebt, so dass sich der tangentiale Übergang weiterhin konstruieren lässt. Alternativ kann ein Kreisbogen, dessen Radius gleich 0 ist, so behandelt werden, dass das Profil an der Position dieses Kreisbogens einen Knick aufweist, wobei die Größe des Knicks durch den Winkel dieses Kreisbogens gegeben ist. In dem vorliegenden Beispiel resultieren aus der beschriebenen Anordnungsregel die folgenden Positionen der Mittelpunkte der 2 weiteren Kreisbögen: Mx_2=0,3039, My_2=0,3202 und Mx_3=0,0000, My_3=0,0000. Der 3. Kreisbogen liegt auf dem dimensionslosen Außenradius RA und die Anordnungsregel, dass mindestens ein Kreisbogen den dimensionslosen Außenradius RA berührt, ist erfüllt.

Der Winkel α_4 des letzten Kreisbogens des ersten Teils des Abschnitts des Profils ergibt sich erfindungsgemäß daraus, dass die Summe der Winkel der 4 Kreisbögen des ersten Teils des Abschnitts des Profils im Bogenmaß gleich π/(2*z) ist, wobei der Winkel α_4 im Bogenmaß größer oder gleich 0 und kleiner oder gleich π/(2*z) ist. In dem vorliegenden Beispiel ergibt sich der Winkel dieses letzten Kreisbogens zu α_4=0,6013. Der dimensionslose Radius R_4 des letzten Kreisbogens des ersten Teils des Abschnitts des Profils ergibt sich erfindungsgemäß daraus, dass der Endpunkt dieses letzten Kreisbogens eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des Profils in Richtung dieses Abschnitts besitzt, der gleich dem halben Achsabstand ist, wobei die Winkelhalbierende wie die Abschnittsgrenzen durch den Drehpunkt des Profils führt. Die Gerade FP ist in der Figur 5b als gepunktete Linie eingezeichnet. Der 4. Kreisbogen des ersten Teils des Abschnitts des Profils wird konstruiert, indem am Endpunkt des 3. Kreisbogens eine Tangente an den 3. Kreisbogen gelegt wird, der Schnittpunkt der Tangente mit der Gerade FP der Mittelpunkt eines Kreises ist, dessen Radius gleich der Länge der Strecke zwischen dem Endpunkt des 3. Kreisbogens und dem Schnittpunkt der Tangente mit der Gerade FP ist, und indem der in Richtung des gewählten Uhrzeigersinns gelegene Schnittpunkt des Kreises mit der Gerade FP der gesuchte Berührpunkt des Endpunktes des 4. Kreisbogens mit der Gerade FP ist. Am Endpunkt des 4. Kreisbogens wird ein Lot auf die Gerade FP gefällt. Der Schnittpunkt dieses Lots mit der Geraden, die durch den Endpunkt und den Mittelpunkt des 3. Kreisbogens gegeben ist, ist der Mittelpunkt des 4. Kreisbogens. In dem vorliegenden Beispiel berechnet sich die Position des Mittelpunkts des 4. Kreisbogens zu Mx_4=0,2580, My_4=0,3761 und der dimensionslose Radius des 4. Kreisbogens ergibt sich zu R_4=0,1239.

Die Winkel α_p', ..., α_1' des zweiten Teils des Abschnitts des Profils sind dadurch bestimmt, dass der Winkel α_j' des j'-ten Kreisbogens des zweiten Teils des Abschnitts gleich dem Winkel α_j des j-ten Kreisbogens des ersten Teils des Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'=α_p). In dem vorliegenden Beispiel berechnen sich die Winkel des zweiten Teils des Abschnitts zu α_1'=α_1=0,4304, α_2'=α_2=0,3812, α_3'=α_3=0,1580 und α_4'=α_4=0,6013.

Die dimensionslosen Radien R_p', ..., R_1' des zweiten Teils des Abschnitts sind dadurch bestimmt, dass die Summe des dimensionslosen Radius R_j' des j'-ten Kreisbogens des zweiten Teils eines Abschnitts und des dimensionslosen Radius R_j des j-ten Kreisbogens des ersten Teils eines Abschnitts gleich dem dimensionslosen Achsabstand A ist, wobei j und j' ganze Zahlen sind, die gemeinsam alle Werte im Bereich 1 bis zur Anzahl der Kreisbögen p beziehungsweise p' durchlaufen (R_1'+R_1=A=1, ..., R_p'+R_p=A=1). In dem vorliegenden Beispiel berechnen sich die dimensionslosen Radien des zweiten Teils des Abschnitts zu R_1'=A-R_1=0,0939, R_2'=AR_2=0,8615, R_3'=A-R_3=0,4200 und R_4'=A-R_4=0,8761.

Die Position der Kreisbögen des zweiten Teils des Abschnitts ergibt sich erfindungsgemäß daraus, das die Kreisbögen tangential ineinander übergehen und das Profil konvex ist. In dem vorliegenden Beispiel ergeben sich die nachfolgenden Koordinaten für die Mittelpunkte der 4 Kreisbögen des zweiten Teil des Abschnitts des Schneckenprofils: Mx_1'=0,3937, My_1'=0,0000, Mx_2'=0,3039, My_2'=-0,3202, Mx_3'=0,0000, My_3'=0,0000 und Mx_4'=0,2580, My_4'=-0,3761. Der 3. Kreisbogen des zweiten Teils des Abschnitts des Profils liegt auf dem dimensionslosen Innenradius RI und die Anordnungsregel, dass mindestens ein Kreisbogen den dimensionslosen Innenradius RI berührt, ist erfüllt.

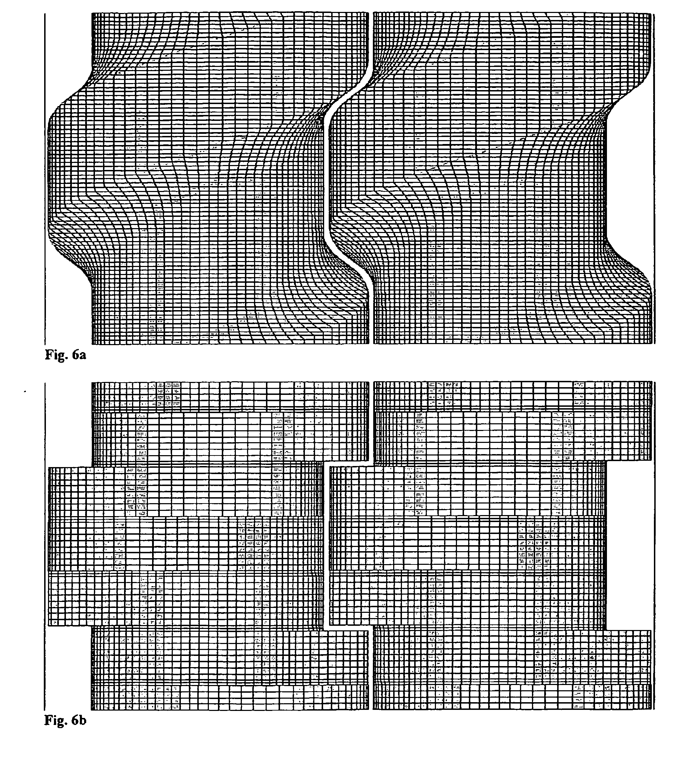

Die Figuren 6a und 6b zeigen beispielhaft, wie die Profile korrespondierender Körper in die dritte Dimension fortgesetzt werden können. Die gezeigten Körper der Figuren 6a und 6b basieren auf dem Profil nach Figur 4a.
Die in Figur 6a gezeigten Körper können beispielsweise als so genannte Förderelemente in Schneckenextrudern eingesetzt werden. Der Gehäuseradius beträgt RG=0,58. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt.

Die in Figur 6b gezeigten Körper können beispielsweise als ein Paar Knetelemente in Schneckenextrudern eingesetzt werden. Der Gehäuseradius beträgt RG=0,58. Das Spiel zwischen den Knetscheiben der beiden Knetelemente beträgt S=0,02. Das Spiel zwischen den Knetscheiben der beiden Knetelemente und dem Gehäuse beträgt D=0,01. Das Knetelement besteht aus 7 Knetscheiben, die jeweils um einen Winkel von π/3 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt.

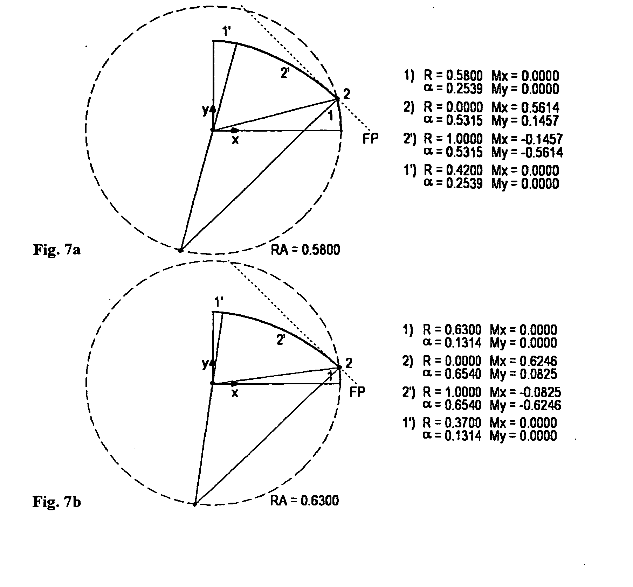

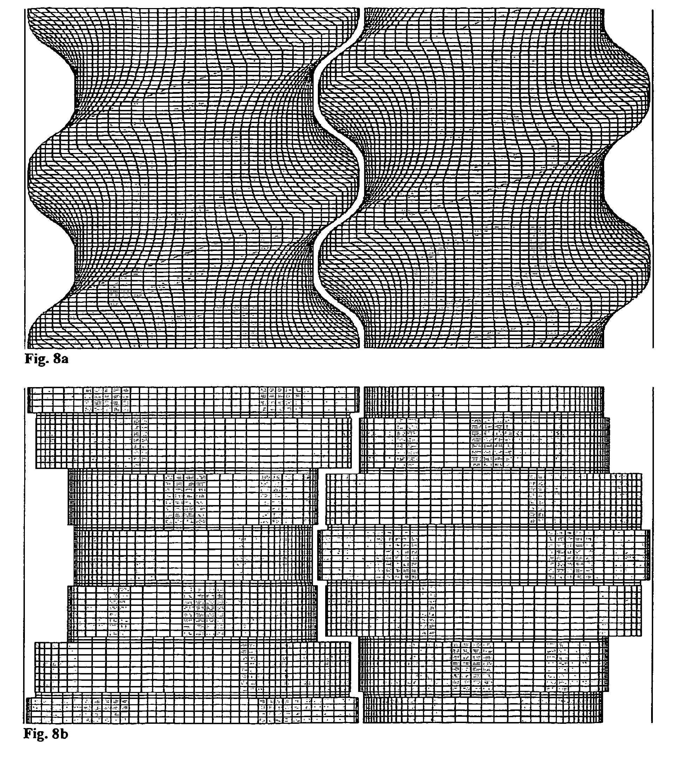

Die Figuren 7 und 8 zeigen Profile der Gangzahl 2. In der Figur 7 wird immer ein Viertel eines Profils der Gangzahl 2 gezeigt. Diese Figur weist den analogen Aufbau wie die Figuren 4 und 5 auf, der für diese Figuren bereits im Detail beschrieben wurde.

Figur 7: Die Figuren 7a und 7b zeigen 4-Kreis-Profile. Die Figuren 7a und 7b unterscheiden sich durch den Außenradius RA. In der Figur 7a beträgt der Schneckenaußenradius RA=0,58. In der Figur 7b beträgt der Außenradius RA=0,63. In den Figuren 7a und 7b besitzt der 1. Kreisbogen jeweils den Radius R_1=RA. In den Figuren 7a und 7b besitzt der 2. Kreisbogen jeweils den Radius R_2=0. In den Figuren 7a und 7b ist der Winkel α_1 des 1. Kreisbogens vom Außenradius RA abhängig. In den Figuren 7a und 7b ist der Radius α_2 des 2. Kreisbogens vom Außenradius RA abhängig.

Die Figuren 8a und 8b zeigen beispielhaft, wie ein Profil in die dritte Dimension fortgeführt werden kann, um korrespondierende Körper zu erhalten. Die gezeigten Körper basieren auf dem Profil nach Figur 7a.
Die in Figur 8a gezeigten Körper können beispielsweise als so genannte Förderelemente in Schneckenextrudern eingesetzt werden. Der Gehäuseradius beträgt RG=0,58. Das Spiel zwischen den beiden Förderelementen beträgt S=0,02. Das Spiel zwischen den beiden Förderelementen und dem Gehäuse beträgt D=0,01. Die Steigung der Förderelemente beträgt T=1,2. Die Länge der Förderelemente beträgt 1,2, was einer Drehung der Schneckenprofile um einen Winkel von 2π entspricht. Das Gehäuse wird durch dünne, durchgezogene Linien links und rechts der beiden Förderelemente dargestellt.

Die in Figur 8b gezeigten Körper können beispielsweise als so genannte Knetelemente in Schneckenextrudern eingesetzt werden. Der Gehäuseradius beträgt RG=0,58. Das Spiel zwischen den Knetscheiben der beiden Knetelemente beträgt S=0,02. Das Spiel zwischen den Knetscheiben der beiden Knetelemente und dem Gehäuse beträgt D=0,01. Das Knetelement besteht aus 7 Knetscheiben, die jeweils um einen Winkel von π/6 rechtsgängig zueinander versetzt sind. Die erste und die letzte Knetscheibe besitzen eine Länge von 0,09. Die mittleren Knetscheiben besitzen eine Länge von 0,18. Die Nut zwischen den Knetscheiben besitzt eine Länge von 0,02. Das Gehäuse wird durch dünne, durchgezogene Linien links und rechts der beiden Knetelemente dargestellt.

## Patentansprüche

1. Verfahren zur Erzeugung von beliebigen Profilen von zwei Körpern K1 und K2, die sich bei gleichsinniger Rotation um zwei, in einem Abstand a parallel zueinander angeordneten Achsen stets in mindestens einem Punkt berühren, wobei das Profil des Körpers K1 aus einer Anzahl n an Kreisbögen zusammengesetzt wird, und wobei
- die Kreisbögen an ihren Anfangs- und Endpunkten tangential ineinander übergehen,
- die Kreisbögen ein konvexes Profil bilden,
- ein Knick in dem Profil durch einen Kreisbogen i mit einem Radius r_i=0 und einem Winkel α_i repräsentiert wird, wobei der Winkel α_i dieselbe Größe hat wie der Winkel, in dem sich die Tangenten der zum Kreisbogen i benachbarten Kreisbögen im Mittelpunkt des Kreisbogens i schneiden, **dadurch gekennzeichnet, dass** das Profil des Körpers K2 aus dem Profil des Körpers K1 gebildet wird, indem zu jedem Kreisbogen des Profils des Körpers K1 ein korrespondierender Kreisbogen des Körpers K2 erzeugt wird, wobei
- die Winkel von korrespondierenden Kreisbögen gleich groß sind,
- die Summe der Radien korrespondierender Kreisbögen gleich dem Achsabstand a ist,
- je eine der Verbindungslinien zwischen dem Mittelpunkt eines Kreisbogens des Körpers K1 und dessen Endpunkten parallel zu je einer der Verbindungslinien zwischen dem Mittelpunkt des korrespondierenden Kreisbogens des Körpers K2 und dessen Endpunkten verläuft.
- die Richtungen, in denen die Endpunkte eines Kreisbogens des Körpers K1 vom Mittelpunkt des Kreisbogens aus liegen, jeweils entgegengesetzt sind zu den Richtungen, in denen die Endpunkte des korrespondierenden Kreisbogens des Körpers K2 vom Mittelpunkt des Kreisbogens des Körpers K2 aus liegen,
- der Mittelpunkt eines Kreisbogens des Körpers K1 einen Abstand zum Mittelpunkt eines korrespondierenden Kreisbogens des Körpers K2 hat, der dem Achsabstand entspricht,
- die Verbindungslinie zwischen dem Mittelpunkt eines Kreisbogens des Körpers K1 und dem Mittelpunkt des korrespondierenden Kreisbogens des Körpers K2 parallel zu der Verbindungslinie zwischen dem Drehpunkt des Körpers K1 und dem Drehpunkt des Körpers K2 ist,
- die Richtung, in die der Mittelpunkt eines Kreisbogens des Körpers K1 verschoben werden müsste, um mit dem Mittelpunkt des korrespondierenden Kreisbogens des Körpers K2 zur Deckung gebracht zu werden, die gleiche ist, in die der Drehpunkt des Körpers K1 verschoben werden muss, um mit dem Drehpunkt des Körpers K2 zur Deckung gebracht zu werden, und dass
- eine Anzahl n an Kreisbögen gewählt wird, die das Profil des Körpers K1 bilden sollen, wobei n eine ganze Zahl ist, die größer oder gleich 1 ist,
- ein Außenradius ra gewählt wird, wobei ra einen Wert annehmen kann, der größer als 0 (ra>0) und kleiner oder gleich dem Achsabstand (ra≤a) ist,
- ein Innenradius ri gewählt wird, wobei ri einen Wert annehmen kann, der größer oder gleich 0 (ri≥0) und kleiner oder gleich ra (ri≤ra) ist,
- n Kreisbögen des Körpers K1 im oder gegen den Uhrzeigersinn um die Drehachse des Körpers K1 so angeordnet werden, dass
○ die Größen von n-1 Kreisbögen durch die wählbaren Winkel α_1, α_2, ..., α_(n-1) und die wählbaren Radien r_1, r_2, ..., r_(n-1) festgelegt sind, wobei die Winkel im Bogenmaß größer oder gleich 0 und kleiner oder gleich 2π und die Radien größer oder gleich 0 und kleiner oder gleich dem Achsabstand a sind,
○ der Winkel α_n eines letzten Kreisbogens sich dadurch ergibt, dass die Summe der n Winkel der n Kreisbögen im Bogenmaß gleich 2π ist,
○ der Radius r_n eines letzten Kreisbogens sich dadurch ergibt, dass dieser letzte Kreisbogen das Profil schließt,
○ alle Kreisbögen derart tangential ineinander übergehen, dass sich ein konvexes Profil ergibt,
○ ein Kreisbogen, dessen Radius gleich 0 ist, bevorzugt wie ein Kreisbogen behandelt wird, dessen Radius gleich eps ist, wobei eps eine sehr kleine positive reelle Zahl ist, die gegen 0 strebt (eps<<1, eps→0),
○ jeder der Kreisbögen innerhalb oder auf den Grenzen eines Kreisrings mit dem Außenradius ra und dem Innenradius ri liegt, dessen Mittelpunkt auf dem Drehpunkt des Körpers K1 liegt,
○ mindestens einer der Kreisbögen den Außenradius ra berührt.
○ mindestens einer der Kreisbögen den Innenradius ri berührt.

2. Verfahren nach Anspruch 1, **dadurch gekennzeichnet, dass** sich die Kreisbögen i' des Profils des Körpers K2 aus den Kreisbögen i des Profils des Körpers K1 in der Weise ergeben, dass
○ die Anzahl n' an Kreisbögen gleich n ist,
○ i und i' ganze Zahlen sind, die gemeinsam alle Werte im Bereich 1 bis zur Anzahl der Kreisbögen n beziehungsweise n' durchlaufen (i'=i),
○ für die Winkel der Kreisbögen i' gilt: α_1' = α_1; α_2' = α_2; ...; α_n' = α_n,
○ für die Radien der Kreisbögen i' gilt r_1' = a - r_1; r_2' = a - r_2; ... r_n' = a-r_n,
○ der Mittelpunkt des i'-ten Kreisbogens des Profils des Körpers K2 einen Abstand vom Mittelpunkt des i-ten Kreisbogens des Profils des Körpers K1 besitzt, der gleich dem Achsabstand a ist.
○ der Mittelpunkt des i'-ten Kreisbogens des Profils des Körpers K2 einen Abstand vom Drehpunkt des Körpers K2 besitzt, der dem Abstand des Mittelpunkts des i-ten Kreisbogens des Profils des Körpers K1 von dem Drehpunkt des Körpers K1 entspricht,
○ die Verbindungslinie zwischen dem Mittelpunkt des i'-ten Kreisbogens des Profils des Körpers K2 und dem Mittelpunkt des i-ten Kreisbogens des Profils des Körpers K1 eine Parallele zu einer Verbindungslinie zwischen dem Drehpunkt des Körpers K2 und dem Drehpunkt des Körpers K1 ist,
○ ein Anfangspunkt des i'-ten Kreisbogens des Profils des Körpers K2 in einer Richtung bezogen auf den Mittelpunkt des i'-ten Kreisbogens des Profils des Körpers K2 liegt, die entgegengesetzt derjenigen Richtung ist, in der ein Anfangspunkt des i-ten Kreisbogens des Profils des Körpers K1 bezogen auf den Mittelpunkt des i-ten Kreisbogens des Profils des Körpers K1 liegt.

3. Verfahren nach Anspruch 1 oder 2, **dadurch gekennzeichnet, dass** bei Verwendung eines kartesischen Koordinatensystems mit dem Drehpunkt des Profils des Körpers K1 im Ursprung (x=0, y=0) und dem Drehpunkt des Körpers K2 im Punkt mit den Koordinaten x=A=1, y=0 und unter Verwendung dimensionsloser Größen das Profil des Körpers K1 durch die folgenden Schritte gebildet wird:
- Auswahl einer Anzahl n an Kreisbögen, die das Profil des Körpers K1 bilden sollen, wobei n eine ganze Zahl ist, die größer oder gleich 1 ist,
- Auswahl eines Außenradius RA, der größer 0 (RA>0) und kleiner oder gleich dem Achsabstand (RA≤1) ist,
- Auswahl eines Innenradius RI, der größer oder gleich 0 (RI≥0) und kleiner oder gleich RA (RI≤RA) ist,
- Anordnung der Kreisbögen i des Körpers K1 im oder gegen den Uhrzeigersinn um die Drehachse des Körpers K1, wobei i ein Index ist, der die Zahlen von 1 bis n durchläuft, so dass
○ die Summe der Winkel α_i aller Kreisbögen gleich 2π ist.
○ der Radius R_i eines jeden Kreisbogens größer oder gleich 0 und kleiner oder gleich 1 ist,
○ der Anfangs- und Mittelpunkt eines ersten Kreisbogens auf die x-Achse gelegt werden, wobei der Anfangspunkt in den Bereich x=RI bis x=RA gelegt wird und die x-Koordinate des Mittelpunkts kleiner oder gleich der x-Koordinate des Anfangspunkts ist,
○ für i<n der Endpunkt des i-ten Kreisbogens gleich dem Anfangspunkt des (i+1)-ten Kreisbogens ist,
○ für i=n der Endpunkt des i-ten Kreisbogens gleich dem Anfangspunkt des ersten Kreisbogens ist,
○ jeder der Kreisbögen tangential in den benachbarten Kreisbogen übergeht, wobei ein Kreisbogen mit R_i=0 bevorzugt wie ein Kreisbogen mit R_i=eps behandelt wird, wobei eps eine sehr kleine positive reelle Zahl ist, die gegen 0 strebt (eps<<1, eps→0),
○ das Profil an keiner Stelle einen Abstand vom Drehpunkt besitzt, der größer als der Außenradius RA ist,
○ das Profil an mindestens einer Stelle einen Abstand vom Drehpunkt besitzt, der gleich dem Außenradius RA ist,
○ das Profil an keiner Stelle einen Abstand vom Drehpunkt besitzt, der kleiner als der Innenradius RI ist,
○ das Profil an mindestens einer Stelle einen Abstand vom Drehpunkt besitzt, der gleich dem Innenradius RI ist,
○ das Profil konvex ist.

4. Verfahren nach Anspruch 3, **dadurch gekennzeichnet, dass** sich das Profils des Körpers K2 sich aus dem Profil des Körpers K1 so ergibt, dass
○ n' = nist,
○ i' ein Index ist, der alle Zahlen von 1 bis n' durchläuft,
○ α_i' = α_i für i=i' ist,
○ R_i' + R_i = 1 für i=i' ist,
○ das Profil aus n' Kreisbögen aufgebaut wird, die im selben Uhrzeigersinn angeordnet werden, wie die Kreisbögen des Profils des Körpers K1,
○ der Anfangspunkt des ersten Kreisbogens des Profils des Körpers K2 gleich dem Anfangspunkt des ersten Kreisbogens des Profils des Körpers K1 ist und der Mittelpunkt des ersten Kreisbogens des Profils des Körpers K2 auf der x-Achse liegt, wobei die x-Koordinate des Mittelpunkts größer oder gleich der x-Koordinate des Anfangspunkts ist,
○ für i'<n' der Endpunkt des i'-ten Kreisbogens gleich dem Anfangspunkt des (i+1)'-ten Kreisbogens ist,
○ für i'=n' der Endpunkt des i'-ten Kreisbogens gleich dem Anfangspunkt des 1'-ten Kreisbogens ist,
○ jeder der Kreisbögen tangential in den benachbarten Kreisbogen übergeht, wobei ein Kreisbogen mit R_i'=0 bevorzugt wie ein Kreisbogen mit R_i'=eps behandelt wird, wobei eps eine sehr kleine positive reelle Zahl ist, die gegen 0 strebt (eps<<1, eps→0),
○ das Profil konvex ist.

5. Verfahren nach einem der Ansprüche 1 bis 4, **dadurch gekennzeichnet, dass** das Profil des Körpers K1 so gebildet wird, dass
- eine Gangzahl z gewählt wird, wobei z eine ganze Zahl ist, die größer oder gleich 1 ist,
- die Anzahl der Kreisbögen n so gewählt wird, dass sie ein ganzes Vielfaches p von 4*z ist,
- das Profil in 2*z Abschnitte eingeteilt wird, die **dadurch gekennzeichnet sind, dass** jeder Abschnitt durch zwei Geraden begrenzt ist, die zueinander einen Winkel im Bogenmaß von π/z bilden und die sich im Drehpunkt des Profils schneiden, wobei diese beiden Geraden als Abschnittsgrenzen bezeichnet werden,
- jeder dieser 2*z Abschnitte in einen ersten und einen zweiten Teil untergliedert wird,
- der erste Teil eines Abschnitts aus p Kreisbögen gebildet wird, die in aufsteigender oder absteigender Reihenfolge nummeriert sind,
- zu den p Kreisbögen zugehörige Winkel α_1, ..., α_p so gewählt werden, dass die Summe dieser Winkel gleich π/(2*z) ist, wobei die Winkel im Bogenmaß größer oder gleich 0 und kleiner oder gleich π/(2*z) sind,
- der zweite Teil eines Abschnitts aus p' Kreisbögen gebildet wird, die in umgekehrter Reihenfolge nummeriert sind wie die Kreisbögen des ersten Teils eines Abschnitts, wobei p' eine ganze Zahl ist, die gleich p ist,
- zu den p' Kreisbögen zugehörige Winkel α_p', ..., α_1' dadurch bestimmt sind, dass der Winkel α_j' des j'-ten Kreisbogens des zweiten Teils eines Abschnitts gleich dem Winkel α_j des j-ten Kreisbogens des ersten Teils eines Abschnitts ist, wobei j und j' ganze Zahlen sind, die gemeinsam alle Werte im Bereich 1 bis zur Anzahl der Kreisbögen p beziehungsweise p' durchlaufen (α_1'=α_1, ..., α_p'= 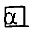 p),
- die Summe des Radius r_j' des j'-ten Kreisbogens des zweiten Teils eines Abschnitts und des Radius r_j des j-ten Kreisbogens des ersten Teils eines Abschnitts gleich dem Achsabstand a ist, wobei j und j' ganze Zahlen sind, die gemeinsam alle Werte im Bereich 1 bis zur Anzahl der Kreisbögen p beziehungsweise p' durchlaufen (r_1'+r_1=a, ..., r_p'+r_p=a),
- ein zu dem Kreisbogen, mit dem das Profil im ersten Teil eines Abschnitts beginnt, zugehöriger Mittelpunkt und zugehöriger Anfangspunkt in Abhängigkeit von der Anordnung der Kreisbögen im oder gegen den Uhrzeigersinn auf eine der Abschnittsgrenzen dieses Abschnitts gelegt werden,
- ein zu dem Kreisbogen, mit dem das Profil im ersten Teil eines Abschnitts endet, zugehöriger Endpunkt eine Gerade FP in einem Punkt tangiert, wobei die Gerade FP senkrecht auf der Winkelhalbierenden der beiden Abschnittgrenzen dieses Abschnitts steht und einen Abstand vom Drehpunkt des Profils in Richtung dieses Abschnitts besitzt, der gleich dem halben Achsabstand ist, wobei die Winkelhalbierende wie die Abschnittsgrenzen durch den Drehpunkt des führt.

6. Verfahren nach Anspruch 5, **dadurch gekennzeichnet, dass** ein Abschnitt in einem der 2*z Abschnitte des erzeugenden Schneckenprofils vorgegeben wird und die übrigen Schneckenprofitabschnitte durch fortlaufende Spiegelung des vorgegebenen Schneckenprofilabschnitts an den Abschnittsgrenzen erzeugt werden.

7. Verfahren nach Anspruch 6, **dadurch gekennzeichnet, dass** das Profil des Körpers K2 für ungerade Gangzahlen identisch zu dem Profil des Körpers K1 ist und sich für gerade Gangzahlen durch Rotation des Profils des Körpers K1 um einen Winkel von π/z ergibt.

8. Verfahren nach einem der Ansprüche 1 bis 7, **dadurch gekennzeichnet, dass** die Profile in Achsrichtung schraubenförmig fortgesetzt werden, wobei die derart erzeugten Körper rechts- oder linksgängig sind und die auf den Achsabstand normierte Steigung im Bereich 0,1 bis 10 liegt und die auf den Achsabstand normierte Länge der Elemente im Bereich 0,1 bis 10 liegt.

9. Verfahren nach einem der Ansprüche 1 bis 7, **dadurch gekennzeichnet, dass** die Profile in Achsrichtung abschnittsweise linear fortgesetzt werden und die auf den Achsabstand normierte Länge der Elemente im Bereich 0,05 bis 10 liegt.

10. Verfahren nach einem der Ansprüche 1 bis 7, **dadurch gekennzeichnet, dass** ein Übergangselement erzeugt wird, indem die Größe und / oder Position eines oder mehrerer Kreisbögen eines ersten Profils kontinuierlich auf die Größe und / oder Position eines oder mehrerer Kreisbögen eines zweiten Profils übergeht, **dadurch gekennzeichnet, dass** das Übergangselement rechts- oder linksgängig ist und die auf den Achsabstand normierte Steigung im Bereich 0,1 bis 10 liegt und die auf den Achsabstand normierte Länge des Elements im Bereich 0,1 bis 10 liegt.

11. Computerprogrammprodukt mit Programmcode-Mitteln, die auf einem computer-lesbaren Datenträger gespeichert sind, um das Verfahren nach einem der Ansprüche 1 bis 10 durchzuführen, wenn das Computerprogrammprodukt auf einem Computer ausgeführt wird.

12. Verwendung des Verfahrens nach einem der Ansprüche 1 bis 10 oder des Computerprogrammprodukts nach Anspruch 11 zur Erzeugung von zwei Körpern K1 und K2.

## Claims

1. Method for producing arbitrary profiles of two bodies K1 and K2 which always touch one another at at least one point while co-rotating about two axes arranged at a spacing a parallel to one another, in which the profile of the body K1 is assembled from a number n of circular arcs, and in which
- the circular arcs merge tangentially into one another at their start points and end points,
- the circular arcs form a convex profile,
- a kink in the profile is represented by a circular arc i with a radius r_i = 0 and an angle α_i, the angle α_i having the same magnitude as the angle at which the tangents of the circular arcs adjacent to the circular arc i intersect at the centre of the circular arc i, **characterized in that** the profile of the body K2 is formed from the profile of the body K1 by producing a corresponding circular arc of the body K2 in relation to each circular arc of the profile of the body K1,
- the angles of corresponding circular arcs being of the same magnitude,
- the sum of the radii of corresponding circular arcs being equal to the axial spacing a,
- one each of the connecting lines between the centre of a circular arc of the body K1 and its end points running parallel to one each of the connecting lines between the centre of the corresponding circular arc of the body K2 and its end points,
- the directions in which the end points of a circular arc of the body K1 lie outwards from the centre of the circular arc being respectively counter to the directions in which the end points of the corresponding circular arc of the body K2 lie outwards from the centre of the circular arc of the body K2,
- the centre of a circular arc of the body K1 having a distance from the centre of a corresponding circular arc of the body K2 which corresponds to the axial spacing,
- the connecting line between the centre of a circular arc of the body K1 and the centre of the corresponding circular arc of the body K2 being parallel to the connecting line between the centre of rotation of the body K1 and the centre of rotation of the body K2,
- the direction in which the centre of a circular arc of the body K1 would have to be displaced in order to be brought into coincidence with the centre of the corresponding circular arc of the body K2 being the same as the direction in which the centre of rotation of the body K1 must be displaced in order to be brought into coincidence with the centre of rotation of the body K2, and **in that**
- a number n of circular arcs is selected which is intended to form the profile of the body K1, n being a whole number which is greater than or equal to 1,
- an outer radius ra is selected, ra being able to assume a value which is greater than 0 (ra > 0) and smaller than or equal to the axial spacing (ra ≤ a),
- an inner radius ri is selected, ri being able to assume a value which is greater than or equal to 0 (ri ≥ 0) and smaller than or equal to ra (ri ≤ ra),
- n circular arcs of the body K1 are arranged in clockwise or anticlockwise fashion around the axis of rotation of the body K1 such that
o the magnitudes of n-1 circular arcs are fixed by the selectable angles α_1, α_2, ..., α_(n-1) and the selectable radii r_1, r_2, ..., r_(n-1), the angles in the radian measure being greater than or equal to 0 and smaller than or equal to 2π, and the radii being greater than or equal to 0 and smaller than or equal to the axial spacing a,
o the angle α_n of a last circular arc results from the fact that the sum of the n angles of the n circular arcs is equal to 2π in radian measure,
o the radius r_n of a last circular arc results from the fact that said last circular arc closes the profile,
o all the circular arcs merge tangentially into one another in such a way that a convex profile results,
o a circular arc whose radius is equal to 0 is preferably treated as a circular arc whose radius is equal to eps, eps being a very small positive real number which tends to 0 (eps << 1, eps → 0),
o each of the circular arcs lies inside or on the boundaries of an annulus with the outer radius ra and the inner radius ri, whose centre lies on the centre of rotation of the body K1,
o at least one of the circular arcs touches the outer radius ra,
o at least one of the circular arcs touches the inner radius ri.

2. Method according to Claim 1, **characterized in that** the circular arcs i' of the profile of the body K2 result from the circular arcs i of the profile of the body K1 in a way that
○ the number n' of circular arcs is equal to n,
○ i and i' are whole numbers which jointly run through all the values in the range of 1 up to the number of the circular arcs n and n', respectively (i' = i),
○ it holds for the angles of the circular arcs i' that: α_1' = α_1; α_2' = α_2; ...; α_n' = α_n,
○ it holds for the radii of the circular arcs i' that: r_1' = a - r_1; r_2' = a - r_2; ... r_n' = a - r_n,
○ the centre of the i'th circular arc of the profile of the body K2 is at a distance from the centre of the ith circular arc of the profile of the body K1 which is equal to the axial spacing a,
○ the centre of the i'th circular arc of the profile of the body K2 is at a distance from the centre of rotation of the body K2 which corresponds to the distance of the centre of the ith circular arc of the profile of the body K1 from the centre of rotation of the body K1,
○ the connecting line between the centre of the i'th circular arc of the profile of the body K2 and the centre of the ith circular arc of the profile of the body K1 is a line parallel to a connecting line between the centre of rotation of the body K2 and the centre of rotation of the body K1,
○ a start point of the i'th circular arc of the profile of the body K2 lies in a direction with reference to the centre of the i'th circular arc of the profile of the body K2 which is counter to that direction in which a start point of the ith circular arc of the profile of the body K1 lies with reference to the centre of the ith circular arc of the profile of the body K1.

3. Method according to Claim 1 or 2, **characterized in that** given the use of a Cartesian coordinate system with the centre of rotation of the profile of the body K1 at the origin (x = 0, y = 0) and the centre of rotation of the body K2 at the point with the coordinates x = A = 1, y = 0, and making use of dimensionless quantities, the profile of the body K1 is formed by the following steps:
- selection of a number n of circular arcs which are intended to form the profile of the body K1, n being a whole number which is greater than or equal to 1,
- selection of an outer radius RA, which is greater than 0 (RA > 0) and smaller than or equal to the axial spacing (RA ≤ 1),
- selection of an inner radius RI which is greater than or equal to 0 (RI ≥ 0) and smaller than or equal to RA (RI ≤ RA),
- arranging the circular arcs i of the body K1 in a clockwise or anticlockwise fashion around the axis of rotation of the body K1, i being an index which runs through the numbers from 1 to n such that
○ the sum of the angles α_i of all the circular arcs is equal to 2π,
○ the radius R_i of each circular arc is greater than or equal to 0 and smaller than or equal to 1,
○ the start point and centre of a first circular arc are laid onto the x-axis, the start point being laid in the range of x = RI to x = RA, and the x-coordinate of the centre being smaller than or equal to the x-coordinate of the start point,
○ for i < n the end point of the ith circular arc is equal to the start point of the (i + l)th circular arc,
○ for i = n, the end point of the ith circular arc is equal to the start point of the first circular arc,
○ each of the circular arcs merges tangentially into the adjacent circular arc, a circular arc with R_i = 0 preferably being treated as a circular arc with R_i = eps, eps being a very small positive real number which tends to 0 (eps << 1, eps → 0),
○ at no location is the profile at a distance from the centre of rotation which is greater than the outer radius RA,
○ at at least one location, the profile is at a distance from the centre of rotation which is equal to the outer radius RA,
○ at no location is the profile at a distance from the centre of rotation which is smaller than the inner radius RI,
○ at at least one location, the profile is at a distance from the centre of rotation which is equal to the inner radius RI,
○ the profile is convex.

4. Method according to Claim 3, **characterized in that** the profile of the body K2 results from the profile of the body K1 such that
○ n' = n,
○ i' is an index which runs through all the numbers from 1 to n',
○ α_i' = α_i for i = i',
○ R_i' + R_i = 1 for i = i',
○ the profile is constructed from n' circular arcs which are arranged in the same clockwise direction as the circular arcs for the profile of the body K1,
○ the start point of the first circular arc of the profile of the body K2 is equal to the start point of the first circular arc of the profile of the body K1, and the centre of the first circular arc of the profile of the body K2 lies on the x-axis, the x-coordinate of the centre being greater than or equal to the x-coordinate of the start point,
○ for i' < n' the end point of the i'th circular arc is equal to the start point of the (i+l)'th circular arc,
○ for i' = n' the end point of the i'th circular arc is equal to the start point of the l'th circular arc,
○ each of the circular arcs merges tangentially into the adjacent circular arc, a circular arc with R_i' = 0 preferably being treated as a circular arc with R_i' = eps, eps being a very small positive real number which tends to 0 (eps << 1, eps → 0),
○ the profile is convex.

5. Method according to one of Claims 1 to 4, **characterized in that** the profile of the body K1 is formed such that
- a number of flights per unit length z is selected, z being a whole number which is greater than or equal to 1,
- the number of the circular arcs n is selected such that it is an integral multiple p of 4*z,
- the profile is split into 2*z sections which are **characterized in that** each section is bounded by two straight lines which form an angle with one another of π/z in radian measure and which intersect at the centre of rotation of the profile, said two straight lines being denoted as section boundaries,
- each of said 2*z sections is subdivided into a first and a second part,
- the first part of a section is formed from p circular arcs which are numbered in ascending or descending sequence,
- angles α_1, ..., α_p associated with the p circular arcs are selected such that the sum of said angles is equal to π/(2*z), in radian measure the angles being greater than or equal to 0 and smaller than or equal to π/(2*z),
- the second part of a section is formed from p' circular arcs which are numbered in reversed sequence to the circular arcs of the first part of a section, p' being a whole number which is equal to p,
- angles α_p', ..., α_1' associated with the p' circular arcs are determined by virtue of the fact that the angle α_j' of the j'th circular arc of the second part of a section is equal to the angle α_j of the jth circular arc of the first part of a section, j and j' being whole numbers which jointly run through all the values in the range of 1 up to the number of the circular arcs p and p', respectively, (α_1' = α_1, ..., α_p' = α_p),
- the sum of the radius r_j' of the j'th circular arc of the second part of a section and the radius r_j of the jth circular arc of the first part of a section is equal to the axial spacing a, j and j' being whole numbers which jointly run through all the values in the range of 1 up to the number of the circular arcs p and p', respectively, (r_1' = r_1 = a, ..., r_p' + r_p = a),
- a centre associated with the circular arc with which the profile in the first part of a section begins, and an associated start point are laid onto one of the section boundaries of said section as a function of the arrangement of the circular arcs in the clockwise or anticlockwise direction,
- an end point associated with the circular arc with which the profile in the first part of a section ends is tangent to a straight line FP at a point, the straight line FP being perpendicular to the bisector of the two section boundaries of said section and being at a distance from the centre of rotation of the profile in the direction of said section which is equal to half the axial spacing, the bisector leading, like the section boundaries, through the centre of rotation.

6. Method according to Claim 5, **characterized in that** a section is prescribed in one of the 2*z sections of the producing screw profile, and the remaining screw profile sections are produced by continuous mirroring of the prescribed screw profile section at the section boundaries.

7. Method according to Claim 6, **characterized in that** the profile of the body K2 for odd numbers of flights per unit length is identical to the profile of the body K1, and for even numbers of flights per unit length results from rotation of the profile of the body K1 by an angle of π/z.

8. Method according to one of Claims 1 to 7, **characterized in that** the profiles are continued helically in an axial direction, the bodies produced in such a way being right-handed or left-handed, and the pitch normalized to the axial spacing lying in the range from 0.1 to 10, and the length of the elements normalized to the axial spacing lying in the range of 0.1 to 10.

9. Method according to one of Claims 1 to 7, **characterized in that** the profiles are continued linearly in sections in an axial direction, and the length of the elements normalized to the axial spacing lies in the range of 0.05 to 10.

10. Method according to one of Claims 1 to 7, **characterized in that** a transition element is produced
by having the size and/or position of one or more circular arcs of a first profile merge continuously with the size and/or position of one or more circular arcs of a second profile, **characterized in that** the transition element is right-handed or left-handed, and the pitch normalized to the axial spacing lies in the range of 0.1 to 10, and the length of the element normalized to the axial spacing lies in the range of 0.1 to 10.

11. Computer program product having program code means which are stored on a computer readable data medium in order to carry out the method according to one of Claims 1 to 10 when the computer program product is executed on a computer.

12. Use of the method according to one of Claims 1 to 10, or of the computer program product according to Claim 11 in order to produce two bodies K1 and K2.

## Revendications

1. Procédé de production de profils quelconques de deux corps K1 et K2 toujours en contact l'un avec l'autre par au moins un point lors d'une rotation dans le même sens autour de deux axes disposés à une distance a parallèlement l'un à l'autre, le profil du corps K1 étant constitué d'un nombre n d'arcs de cercle, et
- les arcs de cercle se prolongeant tangentiellement les uns dans les autres au niveau de leurs points de début et d'extrémité,
- les arcs de cercle formant un profil convexe,
- une inflexion dans le profil étant représentée par un arc de cercle i ayant un rayon r_i = 0 et un angle α_i, l'angle α_i ayant la même valeur que l'angle auquel les tangentes des arcs de cercle adjacents à l'arc de cercle i se coupent au centre de l'arc de cercle i, **caractérisé en ce que** le profil du corps K2 est formé à partir du profil du corps K1, **en ce que** pour chaque arc de cercle du profil du corps K1 est produit un arc de cercle correspondant du corps K₂,
- les angles d'arcs de cercle correspondants étant égaux,
- la somme des rayons d'arcs de cercle correspondants étant égale à la distance entre les axes a,
- à chaque fois l'une des lignes de connexion entre le centre d'un arc de cercle du corps K1 et ses points d'extrémité s'étendant parallèlement à l'une des lignes de connexion respectives entre le centre de l'arc de cercle correspondant du corps K2 et ses points d'extrémité,
- les directions dans lesquelles s'orientent les points d'extrémité d'un arc de cercle du corps K1 à partir du centre de l'arc de cercle étant à chaque fois opposées aux directions dans lesquelles s'orientent les points d'extrémité de l'arc de cercle correspondant du corps K2 à partir du centre de l'arc de cercle du corps K2,
- le centre d'un arc de cercle du corps K1 présentant une distance au centre d'un arc de cercle correspondant du corps K2 qui correspond à la distance entre les axes,
- la ligne de connexion entre le centre d'un arc de cercle du corps K1 et le centre de l'arc de cercle correspondant du corps K2 étant parallèle à la ligne de connexion entre le centre de rotation du corps K1 et le centre de rotation du corps K2,
- la direction dans laquelle le centre d'un arc de cercle du corps K1 devrait être décalé afin d'être amené en coïncidence avec le centre de l'arc de cercle correspondant du corps K2 étant la même que celle dans laquelle le centre de rotation du corps K1 doit être décalé afin d'être amené en coïncidence avec le centre de rotation du corps K2, et **en ce que**
- un nombre n d'arcs de cercle est sélectionné, lequel doit former le profil du corps K1, n étant un nombre entier qui est supérieur ou égal à 1,
- un rayon extérieur ra est choisi, ra pouvant prendre une valeur qui est supérieure à 0 (ra>0) et inférieure ou égale à la distance entre les axes (ra≤a),
- un rayon intérieur ri est choisi, ri pouvant prendre une valeur qui est supérieure ou égale à 0 (ri≥0) et inférieure ou égale à ra (ri≤ra),
- n arcs de cercle du corps K1 étant disposés dans le sens des aiguilles d'une montre ou dans le sens inverse autour de l'axe de rotation du corps K1 de telle sorte que
- les valeurs de n-1 arcs de cercle sont définies par les angles sélectionnables α_1, α_2, ..., α_(n-1) et les rayons sélectionnables r_1, r_2, ..., r_(n-1), les angles étant, en radians, supérieurs ou égaux à 0 et inférieures ou égaux à 2π et les rayons étant supérieurs ou égaux à 0 et inférieurs ou égaux à la distance entre les axes a,
- l'angle α_n d'un dernier arc de cercle s'obtient par le fait que la somme des n angles des n arcs de cercle vaut 2π radians,
- le rayon r_n d'un dernier arc de cercle s'obtient par le fait que ce dernier arc de cercle ferme le profil,
- tous les arcs de cercle se prolongent tangentiellement les uns dans les autres de telle sorte que l'on obtienne un profil convexe,
- un arc de cercle dont le rayon est égal à 0 est traité de préférence comme un arc de cercle dont le rayon est égal à eps, eps étant un nombre réel positif très petit tendant vers 0 (eps <<1, eps→0),
- chacun des arcs de cercle se situe à l'intérieur ou aux limites d'un anneau circulaire de rayon extérieur ra et de rayon intérieur ri dont le centre se trouve sur le centre de rotation du corps K1,
- au moins l'un des arcs de cercle est en contact avec le rayon extérieur ra,
- au moins l'un des arcs de cercle est en contact avec le rayon intérieur ri.

2. Procédé selon la revendication 1, **caractérisé en ce que** les arcs de cercle i' du profil du corps K2 s'obtiennent à partir des arcs de cercle i du profil du corps K1 par le fait que
- le nombre n' d'arcs de cercle est égal à n,
- i et i' sont des nombres entiers qui balayent ensemble passent par toutes les valeurs dans la plage de 1 jusqu'au nombre des arcs de cercle n respectivement n' (i'=i),
- pour l'angle des arcs de cercle i', on a : α_1'=α_1 ; α_2'=α_2 ; ... ; α_n'=α_n,
- pour les rayons des arcs de cercle i', on a : r_1'=a-r_1 ; r_2'=a-r_2 ; ... r_n'=a-r_n,
- le centre du i'ème arc de cercle du profil du corps K2 est à une distance du centre du ième arc de cercle du profil du corps K1 qui est égale à la distance entre les axes a,
- le centre du i'éme arc de cercle du profil du corps K2 est à une distance du centre de rotation du corps K2 qui correspond à la distance du centre du ième arc de cercle du profil du corps K1 au centre de rotation du corps K1,
- la ligne de connexion entre le centre du i'éme arc de cercle du profil du corps K2 et le centre du ième arc de cercle du profil du corps K1 est une parallèle à une ligne de connexion entre le centre de rotation du corps K2 et le centre de rotation du corps K1,
- un point de départ du i'ème arc de cercle du profil du corps K2 est situé dans une direction par rapport au centre du i'ème arc de cercle du profil du corps K2 qui est opposée à la direction dans laquelle est situé un point de départ du ième arc de cercle du profil du corps K1 par rapport au centre du ième arc de cercle du profil du corps K1.

3. Procédé selon la revendication 1 ou 2, **caractérisé en ce que** lors de l'utilisation d'un système de coordonnées cartésiennes avec le centre de rotation du profil du corps K1 disposé à l'origine (x=0, y=0) et avec le centre de rotation du corps K2 au point de coordonnées x=A=1, y=0 et en utilisant des grandeurs sans dimension, le profil du corps K1 est formé par les étapes suivantes :
- choix d'un nombre n d'arcs de cercle qui doivent former le profil du corps K1, n étant un nombre entier supérieur ou égal à 1,
- choix d'un rayon extérieur RA qui est supérieur à 0 (RA>0) et inférieur ou égal à la distance entre les axes (RA≤1),
- choix d'un rayon intérieur RI qui est supérieur ou égal à 0 (RI≥0) et inférieur ou égal à RA (RI≤RA),
- agencement des arcs de cercle i du corps K1 dans le sens des aiguilles d'une montre ou dans le sens inverse autour de l'axe de rotation du corps K1, i étant un indice qui passe par les nombres de 1 à n, de sorte que
- la somme des angles α_i de tous les arcs de cercle est égale à 2π,
- le rayon R_i de chaque arc de cercle est supérieur ou égal à 0 et inférieur ou égal à 1,
- le point de départ et le centre d'un premier arc de cercle sont placés sur l'axe x, le point de départ étant placé dans la plage x=RI à x=RA et les coordonnées x du centre étant inférieures ou égales aux coordonnés x du point de départ,
- pour i<n, le point d'extrémité du ième arc de cercle est égal au point de départ du (i+1)ëme arc de cercle,
- pour i=n, le point d'extrémité du ième arc de cercle est égal au point de départ du premier arc de cercle,
- chacun des arcs de cercle se prolonge tangentiellement par l'arc de cercle adjacent, un arc de cercle avec R_i=0 étant traité de préférence comme un arc de cercle avec R_i=eps, eps étant un nombre réel positif très petit tendant vers 0 (eps <<1, eps→0),
- le profil ne possède à aucun endroit une distance au centre de rotation qui est supérieure au rayon extérieur RA,
- le profil possède à au moins un endroit une distance au centre de rotation qui est égale au rayon extérieur RA,
- le profil ne possède à aucun endroit une distance au centre de rotation qui est inférieure au rayon intérieur RI,
- le profil possède à au moins un endroit une distance au centre de rotation qui est égale au rayon intérieur RI,
- le profil est convexe.

4. procédé selon la revendication 3, **caractérisé en ce que** le profil du corps K2 s'obtient à partir du profil du corps K1 de telle sorte que
- n'=n,
- i' est un indice qui passe par tous les nombres de 1 à n',
- α_i'=α_i pour i=i',
- R_i' + R_i = 1 pour i=i',
- le profil est constitué de n' arcs de cercle qui sont disposés dans le même sens des aiguilles d'une montre que les arcs de cercle du profil du corps K1,
- le point de départ du premier arc de cercle du profil du corps K2 est le même que le point de départ du premier arc de cercle du profil du corps K1 et le centre du premier arc de cercle du profil du corps K2 se situe sur l'axe x, les coordonnées x du centre étant supérieures ou égales aux coordonnées x du point de départ,
- pour i'<n', le point d'extrémité du i'ème arc de cercle est égal au point de départ du (i+1)'ème arc de cercle,
- pour i'=n', le point d'extrémité du i'ème arc de cercle est égal au point de départ du i'ème arc de cercle,
- chacun des arcs de cercle se prolonge tangentiellement par l'arc de cercle adjacent, un arc de cercle avec R_i'=0 étant traité de préférence comme un arc de cercle avec R_i'=eps, eps étant un nombre réel positif très petit tendant vers 0 (eps <<1, eps→0),
- le profil est convexe.

5. Procédé selon l'une quelconque des revendications 1 à 4, **caractérisé en ce que** le profil du corps K1 est formé de telle sorte que
- un nombre entier z est choisi, z étant un nombre entier qui est supérieur ou égal à 1,
- le nombre des arcs de cercle n est choisi de telle sorte qu'il soit un multiple entier p de 4*z,
- le profil est divisé en 2*z portions qui sont **caractérisées en ce que** chaque portion est limitée par deux droites qui forment entre elles un angle en radians de π/z et qui se coupent au centre de rotation du profil, ces deux droites étant appelées limites de portions,
- chacune de ces 2*z portions est divisée en une première et une deuxième partie,
- la première partie d'une portion est formée de p arcs de cercle qui sont numérotés en ordre croissant ou décroisant,
- des angles α_1, ..., α_p associés aux p arcs de cercle sont choisis de telle sorte que la somme de ces angles soit égale à π/(2*z), les angles étant, en radians, supérieurs ou égaux à 0 et inférieurs ou égaux à π/(2*z),
- la deuxième partie d'une portion est formée de p' arcs de cercle qui sont numérotés en ordre inverse par rapport aux arcs de cercle de la première partie d'une portion, p' étant un nombre entier égal à p,
- des angles α_p', ..., α_1' associés aux p' arcs de cercle sont définis par le fait que l'angle α_j' du j'ème arc de cercle de la deuxième partie d'une portion est égal à l'angle α_j du jème arc de cercle de la première partie d'une portion, j et j' étant des nombres entiers qui passent ensemble par toutes les valeurs dans la plage de 1 jusqu'au nombre des arcs de cercle p, respectivement p' (α_1'=α_1, ..., α_p'=α_p),
- la somme du rayon r_j' du j'ème arc de cercle de la deuxième partie d'une portion et du rayon r_j du jème arc de cercle de la première partie d'une portion est égale à la distance entre les axes a, j et j'étant des nombres entiers qui passent ensemble par toutes les valeurs dans la plage de 1 jusqu'au nombre des arcs de cercle p, respectivement p' (r_1'+r_1=a, ..., r_p'+r_p=a),
- un centre associé à l'arc de cercle avec lequel le profil commence dans la première partie d'une portion et le point de départ associé étant placés en fonction de l'agencement des arcs de cercle dans le sens des aiguilles d'une montre ou dans le sens inverse sur l'une des limites de portions de cette portion,
- un point d'extrémité associé à l'arc de cercle avec lequel le profil se termine dans la première partie d'une portion étant tangent à une droite FP en un point, la droite FP étant perpendiculaire à la bissectrice de l'angle des deux limites de portions de cette portion et possédant une distance au centre de rotation du profil dans la direction de cette portion qui est égale à la moitié de la distance entre les axes, la bissectrice de l'angle passant comme les limites de portions à travers le centre de rotation.

6. Procédé selon la revendication 5, **caractérisé en ce qu'**une portion est prédéfinie dans l'une des 2*z portions du profil en vis sans fin à produire et les autres portions de profil en vis sans fin sont produites par reproduction successive de la portion prédéfinie du profil en vis sans fin au niveau des limites de portions.

7. Procédé selon la revendication 6, **caractérisé en ce que** le profil du corps K2 pour des nombres de pas impairs est identique au profil du corps K1 et s'obtient, pour des nombres de pas pairs, par la rotation du profil du corps K1 suivant un angle de π/z.

8. Procédé selon l'une quelconque des revendications 1 à 7, **caractérisé en ce que** les profils se poursuivent sous forme hélicoïdale dans le sens axial, les corps ainsi produits étant à pas à droite ou à pas à gauche et le pas normé à la distance entre les axes étant situé dans la plage de 0,1 à 10 et la longueur des éléments normée à la distance entre les axes étant située dans la plage de 0,1 à 10.

9. Procédé selon l'une quelconque des revendications 1 à 7, **caractérisé en ce que** les profils se poursuivent linéairement par portions dans la direction axiale et la longueur des éléments normée à la distance entre les axes est comprise dans la plage de 0,05 à 10.

10. Procédé selon l'une quelconque des revendications 1 à 7, **caractérisé en ce qu'**un élément de transition est produit, **en ce que** la dimension et/ou la position d'un ou de plusieurs arcs de cercle d'un premier profil se prolongent en continu par la dimension et/ou la position d'un ou de plusieurs arcs de cercle d'un deuxième profil, **caractérisé en ce que** l'élêment de transition est à pas à droite ou à pas à gauche et le pas normé à la distance entre les axes est situé dans la plage de 0,1 à 10 et la longueur de l'élément normée à la distance entre les axes est située dans la plage de 0,1 à 10.

11. Produit de programme informatique avec des moyens de code programme, qui sont mémorisés sur un support de données lisible par ordinateur, afin de mettre en oeuvre le procédé selon l'une quelconque des revendications 1 à 10 lorsque le produit de programme informatique est exécuté sur un ordinateur.

12. Utilisation du procédé selon l'une quelconque des revendications 1 à 10 ou du produit de programme informatique selon la revendication 11 pour produire deux corps K1 et K2.
